(19) Europäisches Patentamt
European Patent Office
Office européen des brevets

(11) **EP 3 645 282 B1**

(12) **EUROPEAN PATENT SPECIFICATION**

(45) Date of publication and mention
of the grant of the patent:
**04.08.2021 Bulletin 2021/31**

(51) Int Cl.:
***B32B 27/08*** *(2006.01)*    ***B32B 27/36*** *(2006.01)*
***B65D 75/30*** *(2006.01)*

(21) Application number: **18731152.7**

(22) Date of filing: **21.06.2018**

(86) International application number:
**PCT/EP2018/066683**

(87) International publication number:
**WO 2019/002105 (03.01.2019 Gazette 2019/01)**

(54) **USE OF DUAL OVENABLE POLYESTER FILMS IN VACUUM SKIN PACKAGING APPLICATIONS AND SKIN PACKAGES OBTAINED THEREFROM**

VERWENDUNG VON ZWEIFACH OFENTAUGLICHEN POLYESTERFOLIEN IN VAKUUM-SKIN-VERPACKUNGSANWENDUNGEN UND DARAUS ERHALTENE OFENTAUGLICHE SKIN-VERPACKUNGEN

UTILISATION DE FILMS POLYESTER DOUBLES ALLANT AU FOUR DANS DES APPLICATIONS D'EMBALLAGE ET PELLIPLACAGES AINSI OBTENUES ALLANT AU FOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 EP 17178810**

(43) Date of publication of application:
**06.05.2020 Bulletin 2020/19**

(73) Proprietor: **Cryovac, LLC**
**US-Charlotte, NC 28208 (US)**

(72) Inventors:
• **LIPEROTI, Antonio**
**I-21040 Origgio (Varese) (IT)**
• **CIOCCA, Maurizio**
**I-28100 Novara (IT)**
• **GIUSTI, Barbara**
**I-20865 Usmate Velate (MB) (IT)**
• **FORLONI, Roberto**
**I-20017 Rho (MI) (IT)**

(74) Representative: **PGA S.p.A.**
**Via Mascheroni, 31**
**20145 Milano (IT)**

(56) References cited:
**WO-A1-2012/160142    WO-A2-2009/032627**
**US-A1- 2005 136 202**

**Description**

**Technical Field**

The present invention relates to the use of oriented polyester films in vacuum skin packaging applications. Furthermore, the invention relates to preferably dual ovenable skin packages, in particular to preferably dual ovenable vacuum skin food packages for cook-in applications.

**Background Art**

Cook-in packaging, namely packaging in which food products can be cooked directly in the package, in microwave or conventional ovens, in boiling water or water steam, is becoming increasingly popular since it reduces the time spent in preparing meals, is efficient, does not require cooking skills and allows better portion control.
Additionally, if cooking is done in the intact package, the kitchen and the oven remain clean, cooking times are generally reduced, unpleasant smells and juices are not released and the flavor of the product is retained.
Cook-in methods are particularly desirable in certain specific applications, such as for instance, for fresh fish products since they avoid handling raw fish and reduce the risk of contamination.
There are very few plastic materials suitable for the highly demanding dual ovenable cook-in applications, namely materials that are:

- transparent to microwaves for cooking in microwave oven (i.e. microwaveable),
- resistant to temperatures higher than 200°C for cooking in conventional oven (ovenable),
- able to seal strongly enough to prevent leakage from the package during storage and transportation but at the same time easily peelable, for smooth opening, and self-venting to allow vapors to escape the package during cooking,
- able to provide the food with a sufficiently high core temperature throughout the cooking to kill pathogens and bacteria,
- clear and not whitening during cooking to allow inspection,
- approved by Regulatory Authorities for food contact use, namely not releasing contaminants throughout the processing cycle, including any pre-cooking, packaging, heat-sealing, storage and cooking step.

Materials which in practice, have been mostly developed and used for manufacturing dual ovenable packages, are mainly based on polyesters.
Dual-ovenable packages, disclosed in prior art documents, for instance in WO2007093495, WO2009013284 and WO2012160142 in the name of Cryovac or available in the market, typically include a plastic tray closed with a lidding oriented heat shrinkable polyester film sealed around the flange of the tray (dual ovenable tray lidded packages).
Other dual ovenable packages are the flexible packages, described for instance in WO2007054698 (DuPont) in which a thermoformed flexible container with an opening, manufactured from a dual ovenable thermoplastic film by thermoforming, encloses a food item and is closed at the opening by a flexible dual ovenable lid sealed all around the opening.
Another kind of packages commonly used for food packaging are vacuum skin packages.
Vacuum skin packaging is a well-known manufacturing process wherein a product is placed on a rigid, semi-rigid or flexible support (the "bottom web"), that can be flat or shaped, e.g., tray-shaped, bowl-shaped or cup-shaped, the supported product is then passed to a chamber where a "top" web is first drawn upward against a heated dome and then draped down over the product and the support. The movement of the top web is controlled by vacuum and/or air pressure, and the interior of the container is vacuumed before the final welding of the top web to the support. In the VSP process, the top heated film forms a tight skin around the product and tightly adheres to the part of the support not covered by the product.
Vacuum skin packaging is described in many references, including FR1258357, FR1286018, AU3491504, USRE30009, US3574642, US3681092, US3713849,
[0012]    US4055672, US5346735, WO2009141214, EP2722279, and EP2459448. Vacuum skin packaging is commonly employed for packaging food products such as fresh and frozen meat and fish, cheese, processed meat, ready meals and the like. The final package presents a tight fitting, clear package which protects the food article from the external environment.
The films used in conventional skin packaging must have several attributes to be fit-for-use. The films must withstand heating and stretching within the vacuum chamber of the packaging machine without undergoing excessive softening and perforations. The film must be highly formable, in order to adequately conform to the shape of the packaged product, without leaving pleats or air pockets on the package surface or without forming protruding areas of self-adhesion of the film, at the package corners or sides.
The presence of air pockets around the packaged product is undesirable as the residual air may be responsible for a reduced product shelf life through oxidative mechanisms. Furthermore, the pockets may collect the juices released from the product (drip typically released for instance from fresh meat) conferring a quite unpleasant appearance to the package but also resulting in a net weight loss of the product to be consumed.

Regarding the drawback of pleats formation due to the top web self-sealing, known as bridging or webbing, it may be so marked to extend to separate forming units in the same packaging operation thus leading to packages reject.

Packages showing these defects in the top skin draping are scarcely acceptable for the consumer and are generally rejected at the end of the production cycle.

Other important features of VSP films include optical properties, such as glossiness and haze, which contribute to an attractive package appearance and allow visual inspection of the packaged good.

In addition, films for VSP packages must guarantee a seal that provides, on the one hand, for an easy opening of the package but on the other hand, a sufficient package integrity to prevent leakage and preserve the product before consumption, during package storage and handling.

Films traditionally used in conventional VSP applications, typically polyolefin based, are not suitable for dual ovenable applications, especially for high temperature cook-in applications.

As known in the art of packaging, materials suitable for dual ovenable applications are polyester based. However, standard biaxially oriented PET materials (BOPET films) are not suitable for use in vacuum skin packaging because they are too rigid, do not conform well to the product and are scarcely sealable.

In the Applicant's knowledge, there are very few examples of use of polyester films in vacuum skin packaging for dual ovenable applications.

The document WO2009032627A2 in the name of Du Pont, relates to vacuum skin food packages comprising a thermoformable polyester web, for use in both microwave and conventional ovens, which are able to withstand high temperatures. The polyester web comprises a thermoformable substrate layer, comprising a first co-polyester material and, adhered to it, a heat sealable layer comprising a second different co-polyester material. The description of this document is rather general and it neither discloses any three or more layers fully polyester film nor it provides specific information on the actual formability of the webs in the VSP package.

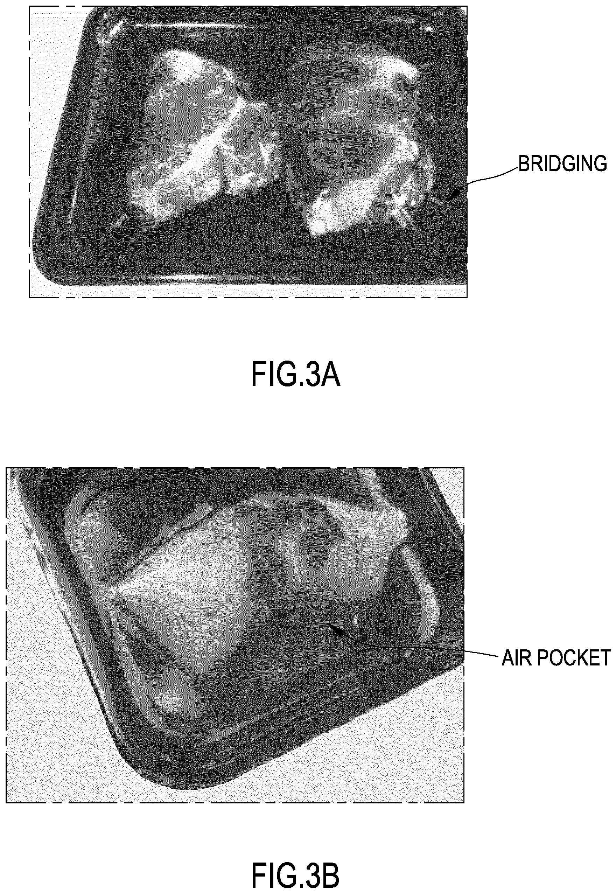

In the Applicant's knowledge, a polyester film for use in VSP is marketed by DuPont Teijin Films under the tradename of Mylar® Skin. This film, even if suitable for the manufacture of VSP packages, does not conform ideally and does not seal completely to the whole surface of the support not occupied by the product but it leaves unsealed areas around the product (air pockets) and provides self-adhesion portions in the top (bridging) (see Fig. 3A-3B).

At page 9 of the DuPont brochure entitled "Cooking with Mylar®", dated March 17, 2016 available at the link http://europe.dupontteijinfilms.com/media/2426/dtf-cooking-with-mylar-the-flexible-cookware-brochure.pdf it is stated "*Mylar® Skin has a draw ratio* of 3:1 *which is suitable for most packs, but less than traditional non ovenable skin films*". In other words, Mylar® Skin appears to be not as formable as conventional non-polyester polyolefin based skin films.

As underlined above, the unsealed areas of Mylar® Skin VSP packages may represent a problem as they may contain residual air, which is undesirable for the product shelf life. Additionally, these pockets may collect liquids and purge that come out of the product, whose sight is not particularly appreciated by the customer, being considered an index of poor freshness of the product.

In conclusion, there is still the need for dual ovenable highly formable polyester films, which are suitable for vacuum skin packaging applications, namely dual ovenable films which withstand high draw ratios under vacuum skin conditions and which conform and seal so well to provide VSP packages devoid of unsealed pockets around the product and self-sealing defects (bridging).


**Summary of the Invention**

The Applicant has surprisingly found that the polyester films disclosed in the documents WO2015/189351 and WO2012/160142 in the name of Cryovac, therein described for use in tray lidding applications or in shallow thermoforming, perform very well in a highly demanding application as vacuum skin packaging.

The Applicant found out that these films are characterized by a very high formability that allows skin applications even with difficult products, such as protruding or sharp products, and even at thicknesses lower than conventional VSP films. Advantageously, using thinner films results in cost savings and improved carbon footprint.

Unexpectedly, these films conform very well to the product and to the support surfaces even in case of deep supports, even in the corner areas or close all around the product, not leaving unsealed areas.

Accordingly, a first object of the present invention is the use of a dual ovenable biaxially oriented polyester film as top web in vacuum skin packaging, said film comprising, preferably consisting of

- an outer heat sealable polyester layer a),
- an inner polyester base layer b), comprising a polyester having an intrinsic viscosity (I.V.) measured according to ASTM D4603-03 higher than 0.75 dl/g, and

- an outer polyester layer c).

A second object of the present invention is a vacuum skin packaging process for the manufacture of a microwaveable, an ovenable or, preferably, a dual ovenable vacuum skin package, which comprises:

- providing a dual ovenable top web,
- providing a microwaveable, an ovenable or, preferably, a dual ovenable support,
- disposing the top web over the support,
- disposing a food product onto the support,
- heating the top web and molding it down upon and around the product and against the support, the space between the heated top web and the support having been evacuated, to form a tight skin around the product, and
- tight sealing said top web over the entire surface of the support not covered by the product by differential air pressure, thus providing a vacuum skin package, characterized in that said dual ovenable top web is a biaxially oriented polyester film comprising, preferably consisting of
- an outer heat sealable polyester layer a),
- an inner polyester base layer b), comprising a polyester having an intrinsic viscosity (I.V.) measured according to ASTM D4603-03 higher than 0.75 dl/g, and
- an outer polyester layer c).

A third object of the present invention is a microwaveable, an ovenable or, preferably, a dual ovenable vacuum skin package comprising:

- a microwaveable, an ovenable or, preferably, a dual ovenable support,
- a food product loaded onto said support and
- a top web draped over the product and welded to the surface of the support not covered by the product,

characterized in that the top web is a dual ovenable biaxially oriented polyester film comprising, preferably consisting of

- an outer heat sealable polyester layer a),
- an inner polyester base layer b), comprising a polyester having an intrinsic viscosity (I.V.) measured according to ASTM D4603-03 higher than 0.75 dl/g, and
- an outer polyester layer c).

**Brief description of the drawings**

Fig. 1 shows a picture of a sausage VSP package according to the present invention.
Fig. 2 shows three pictures of three VSP packages of pork loin slices (Fig.2A), of pork ribs (Fig. 2B) and of chicken breast (Fig. 2C) according to the present invention.
Fig. 3 shows two pictures of meat (Fig. 3A) and salmon (Fig. 3B) VSP packages made with Mylar® Skin as a top web disclosed in Du Pont's brochures (source of
Fig. 3A: page 9 of the brochure of DuPont entitled "Cooking with Mylar®, dated March 17, 2016; source of Fig. 3B: the brochure Wrapid, flexible packaging division, 2013, page 2, paragraph: Mylar® skin - Cooking innovation).
Figures 4, 5 and 6 show a scheme of the sealing defects that may occur in a VSP packaging cycle, their denomination and score in the present formability test.
Figure 7 is a schematic top view of the block used in the present implosion resistance test. The drawing is on scale. The circles represent the holes and the number under each circle expresses the diameter of the corresponding hole in mm.

**Definitions**

As used herein, the term "film" refers to a plastic web, regardless of whether it is film or sheet or tubing.
As used herein, the terms "inner layer" and "internal layer" refer to any film layer having both of its principal surfaces directly adhered to another layer of the film.
As used herein, the term "outer layer" in connection with the multi-layer film refers to a layer having only one of its principal surfaces directly adhered to another layer of the film.
As used herein, "sealing layer" or "sealant layer" or "sealable layer" refer to the outer layer of the multi-layer film that in the VSP packaging process will be in contact with the food product and will seal to the support.

The "abuse layer" is the outer layer c) that in the VSP packaging process will be in contact with the heated dome.

As used herein, the term "base layer" refers to the layer, which in terms of thickness represents the highest portion of the film, in particular, it refers to a layer of the film whose thickness is at least 40%, preferably at least 50%, more preferably at least 60% of the film total thickness.

As used herein, the term "polymer" refers to the product of a polymerization reaction, and is inclusive of homopolymers, and copolymers.

As used herein, the term "homopolymer" is used with reference to a polymer resulting from the polymerization of a single monomer, i.e., a polymer consisting essentially of a single type of mer, i.e., repeating unit.

As used herein, the term "copolymer" refers to a polymer derived from two or more types of monomers, and includes terpolymers.

As used herein the term "polyolefin" refers to any polymerized or co-polymerized olefin that can be linear, branched, or cyclic, substituted or unsubstituted, and possibly modified. Resins such as polyethylene, ethylene- alpha -(C4-C8)olefin copolymers, ethylene-propylene copolymers, ethylene-propylene- alpha - (C4-C8)olefin ter-polymers, propylene-butene copolymer, polybutene, poly(4-methylpentene-1), ethylene-propylene rubber, butyl rubber, as well as copolymers of ethylene (or a higher olefin) with a comonomer which is not an olefin and in which the ethylene (or higher olefin) monomer predominates such as ethylene-vinyl acetate copolymers, ethylene-acrylic acid copolymers, ethylene-alkyl acrylate copolymers, ethylene-methacrylic acid copolymers, ethylene-alkyl methacrylate copolymers, ethylene-alkyl acrylate-maleic anhydride copolymers, ionomers, as well the blends thereof in any proportions are all included. Also included are the modified polyolefins, where the term "modified" is intended to refer to the presence of polar groups in the polymer backbone. The above polyolefin resins can be "heterogeneous" or "homogeneous", wherein these terms refer to the catalysis conditions employed and as a consequence thereof to the particular distribution of the molecular weight, branched chains size and distribution along the polymer backbone, as known in the art.

As used herein, the phrase "ethylene- alpha -olefin copolymer" refers to heterogeneous and to homogeneous polymers such as linear low density polyethylene (LLDPE) with a density usually in the range of from about 0.900 g/cm$^3$ to about 0.930 g/cm$^3$, linear medium density polyethylene (LMDPE) with a density usually in the range of from about 0.930 g/cm$^3$ to about 0.945 g/cm$^3$, and very low and ultra-low density polyethylene (VLDPE and ULDPE) with a density lower than about 0.915 g/cm$^3$, typically in the range 0.868 to 0.915 g/cm$^3$, and such as metallocene-catalyzed EXACT™ and EXCEED™ homogeneous resins obtainable from Exxon, single-site AFFINITY™ resins obtainable from Dow, and TAFMER™ homogeneous ethylene- alpha -olefin copolymer resins obtainable from Mitsui. All these materials generally include co-polymers of ethylene with one or more co-monomers selected from (C4-C10)- alpha -olefin such as butene-1, hexene-1, octene-1, etc., in which the molecules of the copolymers comprise long chains with relatively few side chain branches or cross-linked structures.

As used herein the term "ethylene- alpha - (C4-C8) olefin copolymers" is intended to refer to both heterogeneous and homogeneous (e.g., "single site", or "metallocene") materials with densities of from about 0.87 to about 0.95 g/cm$^3$.

As used herein, the phrase "heterogeneous polymer" or "polymer obtained by heterogeneous catalysis" refers to polymerization reaction products of relatively wide variation in molecular weight and relatively wide variation in composition distribution, i.e., typical polymers prepared, for example, using conventional Ziegler-Natta catalysts, for example, metal halides activated by an organometallic catalyst, i.e., titanium chloride, optionally containing magnesium chloride, complexed to trialkyl aluminum and may be found in patents such as U.S. Patent No. 4,302,565 to Goeke et al. and U.S. Patent No. 4,302,566 to Karol, et al. Heterogeneous catalyzed copolymers of ethylene and an alpha-olefin may include linear low-density polyethylene, very low-density polyethylene and ultra-low-density polyethylene. Some copolymers of this type are available from, for example, The Dow Chemical Company, of Midland, Michigan., U.S.A. and sold under the trademark DOWLEX™ resins.

As used herein, the phrase "homogeneous polymer" or "polymer obtained by homogeneous catalysis" refers to polymerization reaction products of relatively narrow molecular weight distribution and relatively narrow composition distribution. Homogeneous polymers are structurally different from heterogeneous polymers, in that homogeneous polymers exhibit a relatively even sequencing of co-monomers within a chain, a mirroring of sequence distribution in all chains, and a similarity of length of all chains, i.e., a narrower molecular weight distribution. This term includes those homogeneous polymers prepared using metallocenes, or other single-site type catalysts, as well as those homogenous polymers that are obtained using Ziegler Natta catalysts in homogenous catalysis conditions.

The co-polymerization of ethylene and alpha-olefins under homogeneous catalysis, for example, co-polymerization with metallocene catalysis systems which include constrained geometry catalysts i.e., monocyclopentadienyl transition-metal complexes is described in U.S. Patent No. 5,026,798 to Canich. Homogeneous ethylene/ alpha-olefin copolymers (E/AO) may include modified or unmodified ethylene/ alpha-olefin copolymers having a long-chain branched (8-20 pendant carbons atoms) alpha-olefin comonomer available from The Dow Chemical Company, known as AFFINITY™ and ATTANE™ resins, TAFMER™ linear copolymers obtainable from the Mitsui Petrochemical Corporation of Tokyo, Japan, and modified or unmodified ethylene/ -olefin copolymers having a short-chain branched (3-6 pendant carbons atoms) -olefin comonomer known as EXACT™ resins obtainable from ExxonMobil Chemical Company of Houston, Texas, U.S.A. As used herein, the term "modified" refers to a chemical derivative, e.g. one having any form of anhydride functionality, such as anhydride of maleic acid, crotonic acid, citraconic acid, itaconic acid, fumaric acid, etc., whether grafted onto a polymer, copolymerized with a polymer, or blended with one or more polymers, and is also inclusive of derivatives of such functionalities, such as acids, esters, and metal salts derived therefrom.

As used herein, the phrase "modified polymer", as well as more specific phrases such as "modified ethylene/vinyl acetate copolymer", and "modified polyolefin" refer to such polymers having an anhydride functionality, as defined immediately above, grafted thereon and/or copolymerized therewith and/or blended therewith. Preferably, such modified polymers have the anhydride functionality grafted on or polymerized therewith, as opposed to merely blended therewith.

As used herein, the phrase "anhydride-containing polymer" and "anhydride-modified polymer" refer to one or more of the following: (1) polymers obtained by copolymerizing an anhydride-containing monomer with a second, different monomer, and (2) anhydride grafted copolymers, and (3) a mixture of a polymer and an anhydride-containing compound.

As used herein, the term "modified polyolefin" is inclusive of modified polymers prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It is also inclusive of modified polymers obtained by incorporating an unsaturated carboxylic acid, e.g., maleic acid, fumaric acid or the like, or a derivative thereof such as the anhydride, ester or metal salt or the like into the olefin homopolymer or copolymer, by blending with or grafting to the polymer chain.

Ethylene-unsaturated acid polymers include homopolymers and copolymers having an acrylic acid and/or a methacrylic acid linkage between monomer units. Acrylic acid-based resins may be formed by any method known to those skilled in the art and may include polymerization of acrylic acid or methacrylic acid in the presence of light, heat, or catalysts such as benzoyl peroxides, or by the esters of these acids, followed by saponification. Examples of acrylic acid-based resins include, but are not limited to, ethylene/acrylic acid copolymer (EAA), ethylene/methacrylic acid copolymer (E/ AA), and blends thereof.

Ethylene-unsaturated ester polymers include homopolymers and copolymers having an ester of acrylic acid linkage between the monomer units. Acrylate-based resins may be formed by any method known to those skilled in the art, such as, for example, polymerization of the acrylate monomer by the same methods as those described for acrylic acid-based resins. Examples of acrylate- based resin include, but are not limited to, methyl/methacrylate copolymer (MMA), ethylene/vinyl acrylate copolymer (EVA), ethylene/methacrylate copolymer (EMA), ethylene/n-butyl acrylate copolymer (EnBA), and blends thereof.

As used herein, the phrase "ethylene/vinyl acetate" (EVA) refers to a copolymer formed from ethylene and vinyl acetate monomers wherein the ethylene units are present in a major amount and the vinyl-acetate units are present in a minor amount. The typical amount of vinyl-acetate may range from about 5 to about 20%.

As used herein, the term "ionomer" designates metal salts of acidic copolymers, such as metal salts of ethylene/acrylic acid copolymers or metal salts of ethylene/methacrylic acid copolymers, wherein the metal cation can be an alkali metal ion, a zinc ion or other multivalent metal ions. These resins are available, for instance, from DuPont under the trade name Surlyn™.

As used herein, the term "polyester" refers in general to homopolymers or copolymers having an ester linkage between monomer units, which may be formed, for example, by condensation polymerization reactions between a dicarboxylic acid and glycol. The term "polyester" refers to both homo- and co-polyesters, wherein homo-polyester are defined as polymers obtained from the condensation of one dicarboxylic acid with one diol and co-polyesters are defined as polymers obtained from the condensation of one or more dicarboxylic acids with one or more diols. The ester monomer unit may be represented by the general chemical formula: R-C(O)O-R' where R and R' = an alkyl group and may be generally formed from the polymerization of dicarboxylic acid and diol monomers or monomers containing both carboxylic acid and hydroxy moieties. The dicarboxylic acid may be linear or aliphatic, i.e., oxalic acid, malonic acid, succinic acid, glutaric acid, adipic acid, pimelic acid, suberic acid, azelaic acid, sebacic acid, and the like; or may be aromatic or alkyl-substituted aromatic acids, i.e., various isomers of phthalic acid, such as para-phthalic acid (or terephthalic acid), isophthalic acid and naphthalic acid. Specific examples of alkyl-substituted aromatic acids include the various isomers of dimethylphthalic acid, such as dimethylisophthalic acid, dimethylorthophthalic acid, dimethylterephthalic acid, the various isomers of diethylphthalic acid, such as diethylisophthalic acid, diethylorthophthalic acid, the various isomers of dimethylnaphthalic acid, such as 2, 6-dimethylnaphthalic acid and 2, 5-dimethylnaphthalic acid, and the various isomers of diethylnaphthalic acid. The glycols may be straight-chained or branched. Specific examples include ethylene glycol, propylene glycol, trimethylene glycol, 1,4-butane diol, neopentyl glycol and the like. The polyalkyl terephthalates are aromatic esters having a benzene ring with ester linkages at the 1, 4-carbons of the benzene ring as compared to polyalkyl isophthalates, where two ester linkages are present at the 1, 3-carbons of the benzene ring. In contrast, polyalkyl naphthalates are aromatic esters having two fused benzene rings where the ester linkages may be present at the 2, 3-carbons or the 1, 6-carbons.

As used herein, the terms "polyester layer" or "polyester film" refer to a layer or a film comprising more than 50%, preferably more than 60%, 70%, 80%, and 90% by weight of a polyester with respect to the layer or film weight respectively.

As used herein, the term intrinsic viscosity refers to the limiting value of the reduced viscosity at infinite dilution of the polymer and is determined using a capillary viscometer. A suitable method for the determination of the intrinsic viscosity is for instance ASTM method D4603-03.

As used herein, the term "major proportion" of a resin in a layer in a film or in a container means that more than 50% by weight of said resin is present in said layer, or film.

As used herein, the term "minor proportion" of a resin in a layer in a film or in a container means that less than 50% by weight of said resin is present in said layer or film.

As used herein, the phrases "longitudinal direction" and "machine direction", herein abbreviated "LD" or "MD", refer to a direction "along the length" of the film, i.e., in the direction of the film as the film is formed during coextrusion.

As used herein, the phrase "transverse direction" or "crosswise direction", herein abbreviated "TD", refers to a direction across the film, perpendicular to the machine or longitudinal direction.

As used herein, the term "extrusion" is used with reference to the process of forming continuous shapes by forcing a molten plastic material through a die, followed by cooling or chemical hardening. Immediately prior to extrusion through the die, the relatively high-viscosity polymeric material is fed into a rotating screw of variable pitch, i.e., an extruder, which forces the polymeric material through the die.

As used herein, the term "coextrusion" refers to the process of extruding two or more materials through a single die with two or more orifices arranged so that the extrudates merge and weld together into a laminar structure before chilling, i.e., quenching.

As used herein, the term "oriented" refers to a thermoplastic web, which has been elongated, at a temperature above the softening temperature, in either one direction ("uniaxial") or two directions ("biaxial"), followed by cooling the film to "set" it while substantially retaining the elongated dimensions. Solid-state orientation at a temperature above the softening point produces a film exhibiting heat shrink character upon subsequent heating. Orientation in the melt state, as in the production of a blown film, does not result in a heat shrinkable film. Orientation in both the melt state and the solid state increases the degree of alignment of the polymer chains, thereby enhancing the mechanical properties of the resulting oriented film.

As used herein, the term "non-heat-shrinkable" refers to a film characterized by a total free shrink percentage (i.e. the sum of free shrink percentage in LD and TD directions) lower than 5%, measured in oven at 180°C according to the test method reported in the experimental part.

As used herein, the phrase "film suitable for use as top web in vacuum skin packaging" refers to a thermoplastic film which is suitable for use in a VSP process, namely a film able to stand heating and stretching conditions within the vacuum chamber of the packaging machine without undergoing perforations and excessive softening and, afterwards, able to tight adhering to the surface of the support. Preferably, a film for use as a top web in VSP applications is characterized by high implosion resistance, formability and sealability.

As used herein, the term "support" means the bottom part of the VSP package into which the product is accommodated and onto which the top web is sealed for the part that is not covered by the product.

As used herein, the term "sealing temperature" refers to the temperature of the dome of the VSP equipment, onto which the top web is applied by suction and by which is heated during the VSP cycle.

As used herein the term "microwaveable" when used in connection with the films or the VSP packages of the present invention, refers to those structures that are "substantially microwave transparent" as well as those that are "microwave active". While substantially microwave-transparent films or packages are those capable of being crossed by at least 80%, preferably at least 90% of the microwaves generated by a microwave oven without any sort of interference therewith, the microwave-active films or packages are those that incorporate microwave reflective components intended to modify the energy deposition within the adjacent foodstuff. To be "microwaveable" in both cases, under the conditions of use, the packaging material should not be degraded or deformed and it should not release more than 60 ppm of global contaminants to the packaged food in contact therewith. In practice, packaging materials that withstand a heat treatment at 121°C for 30 min (conditions that are drastic enough not to be reached normally in microwave cooking) without deforming and releasing less than 60 ppm of contaminants, are considered to be "microwaveable" according to most of the food laws.

As used herein the term "dual ovenable" refers to a film or to a package suitable for both microwave and conventional oven cooking, at temperatures up to 220°C or even higher.

Unless otherwise stated, all the percentages are percentages by weight.

## Detailed description of the invention

A first object of the present invention is the use of a dual ovenable biaxially oriented polyester film as top web in vacuum skin packaging, said film comprising, preferably consisting of

- an outer heat sealable polyester layer a),
- an inner polyester base layer b), comprising a polyester having an intrinsic viscosity (I.V.) measured according to ASTM D4603-03 higher than 0.75 dl/g, and
- an outer polyester layer c).

The polyester film for use as top web in vacuum skin packaging comprises, preferably consists of, three polyester layers a), b) and c).

The outer heat sealable polyester layer a) of the film comprises at least 80%, preferably at least 85% by weight with respect to the layer weight, of one or more polyesters.

The composition of the heat sealable polyester layer a) may vary to a certain extent providing that it seals to polyester materials at temperatures lower than the melting temperatures of the resins of the base layer b) and of the outer layer c).

The seal must be strong enough to prevent leakage of the package during storage and transportation but at the same time, it must allow self-venting during cooking and easy opening of the package after cooking by the final consumer.

Suitable heat sealable polyester compositions for layer a) are known and are described, for instance, in WO2007093495 or in WO2012160142.

In one embodiment, according to WO2007093495, the polyester(s) of the heat sealable layer a) may be an amorphous polyesters or a crystalline polyester having a melting temperature not higher than the melting temperature of the polyester of the base layer b) or admixtures thereof.

The term "crystalline" is used herein to indicate that the resin has a definite melting temperature.

The heat-sealable layer a) may comprise an amorphous co-polyester resin or a crystalline co-polyester resin having a melting temperature lower than the melting temperature of the polyester of the base layer b).

As polyester resins for the heat-sealable layer a), co-polyester resins derived from one or more dicarboxylic acid(s) or their lower alkyl (up to 14 carbon atoms) diesters with one or more glycol(s), particularly an aliphatic or cycloaliphatic glycol may be used.

Suitable dicarboxylic acids include aromatic dicarboxylic acids such as terephthalic acid, isophthalic acid, phthalic acid, or 2, 5-, 2, 6- or 2, 7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol.

In one embodiment, according to WO2007093495, the heat sealable layer a) comprises a crystalline co-polyester.

With crystalline co-polyester, a co-polyester having at least a distinct melting peak in a differential scanning calorimetry (DSC) thermogram is meant. The melting point of the resins can be measured by using the DSC technique according to ASTM D3418.

Preferably, the crystalline co-polyester of the heat-sealable layer comprises an aromatic dicarboxylic acid and an aliphatic dicarboxylic acid. A preferred aromatic dicarboxylic acid is terephthalic acid. Preferred aliphatic dicarboxylic acids are selected from sebacic acid, adipic acid and azelaic acid. The concentration of the aromatic dicarboxylic acid present in the co-polyester is preferably in the range from 45 to 80, more preferably 50 to 70, and particularly 55 to 65 mole% based on the di-carboxylic acid components of the co-polyester. The concentration of the aliphatic di-carboxylic acid present in the co-polyester is preferably in the range from 20 to 55, more preferably 30 to 50, and particularly 35 to 45 mole% based on the dicarboxylic acid components of the co-polyester. Particularly preferred examples of suitable co-polyesters are (i) co-polyesters of azelaic acid and terephthalic acid with an aliphatic glycol, preferably ethylene glycol; (ii) co-polyesters of adipic acid and terephthalic acid with an aliphatic glycol, preferably ethylene glycol; and (iii) co-polyesters of sebacic acid and terephthalic acid with an aliphatic glycol, preferably butylene glycol. Preferred co-polyesters include a co-polyester of sebacic acid/terephthalic acid/butylene glycol having a melting point Tm of 117°C, and a co-polyester of azelaic acid/ terephthalic acid/ethylene glycol having a Tm of 150°C. In one embodiment, according to WO2007093495, the co-polyester of the heat-sealable layer a) is derived from an aliphatic diol and a plurality of aromatic dicarboxylic acids, particularly terephthalic acid and isophthalic acid. A preferred co-polyester is derived from ethylene glycol, terephthalic acid and isophthalic acid. The preferred molar ratios of the terephthalic acid component to the isophthalic acid component are in the range of from 50:50 to 90:10, preferably in the range from 65:35 to 85:15.

In one embodiment, according to WO2007093495, the heat-sealable layer a) comprises an amorphous co-polyester.

Suitable amorphous co-polyesters are those derived from an aliphatic diol and a cycloaliphatic diol with one or more, dicarboxylic acid(s), preferably an aromatic dicarboxylic acid. Typical polyesters which provide satisfactory heat-sealable properties include co-polyesters of terephthalic acid with an aliphatic diol and a cycloaliphatic diol, especially ethylene glycol and 1, 4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65. An example of such a co-polyester is PETG Eastar 96763 sold by Eastman, which comprises a co-polyester of terephthalic acid, about 33 mole% 1, 4-cydohexane dimethanol and about 67 mole% ethylene glycol and which has a glass transition temperature Tg of 81°C.

To reduce the sealing strength, thereby facilitating the opening of the package, it may be convenient to blend the one or more polyester resins of the heat-sealable outer layer a) with 3 to 40% by weight, 5 to 30% by weight, preferably 15 to 25% by weight of an appropriate thermoplastic resin. Suitable thermoplastic resins, that contribute to lowering the sealing strength without impairing the optical properties of the film, are polyamides, polystyrenes, in particular styrene-butadiene block copolymers, ionomers, ethylene/unsaturated carboxylic acid copolymers, like ethylene/ (meth)acrylic acid copolymers, ethylene/unsaturated esters copolymers, like ethylene/ vinyl acetate copolymers, maleic anhydride-modified polyethylenes, ethylene/propylene copolymers and ethylene/cyclic olefin copolymers, like ethylene/norbornene copolymers.

A good balance between hermeticity of the seal and ease of removal of the film on opening the package can be obtained by blending an amorphous co-polyester with 3 to 40% by weight of an ethylene/ acrylic acid copolymer or of an ethylene/propylene copolymer or of maleic anhydride-modified polyethylenes. Good results may be obtained by blending PET with 3 to 40% by weight of a polyamide. Suitable polyamides are for instance polyamide 6, polyamide 66, and co-polyamides including co-polyamide 6/9, co-polyamide 6/10, co-polyamide 6/12, co-polyamide 6/66, co-polyamide 6/69, and aromatic polyamides and co-polyamides, such as 6I, 6I/6T, MXD6, MXD6/MXDI.

Blends of an amorphous co-polyester with 3 to 40% by weight of an ethylene/ acrylic acid copolymer are particularly suitable in packaging applications, which require heat-treatment, like pasteurization, as they provide the best balance between ease of opening and hermeticity of the package. An example of a suitable amorphous polyester is PETG Eastar® 6763 sold by Eastman.

According to WO2012160142, when heating or cooking in conventional oven at higher temperatures is required, the heat sealable layer a) comprises - in addition to from about 25% to 70% by weight of at least a first amorphous polyester having a melting temperature not higher than the melting temperature of the polyester of the base layer b) and from 10% to 20% by weight of at least a thermoplastic resin - also from 20% to 60% by weight of at least a further polyester resin (ternary blend). Suitable amorphous polyester resins are those deriving from an aliphatic diol and a cycloaliphatic diol with one or more dicarboxylic acids, preferably an aromatic dicarboxylic acid. Preferably, said amorphous polyester is selected among those deriving from an aliphatic diol and a cycloaliphatic diol with one dicarboxylic aromatic acid, more preferably with terephthalic acid. Preferred amorphous polyesters are co-polyesters of terephthalic acid with an aliphatic diol and a cycloaliphatic diol, particularly ethylene glycol and 1, 4-dicyclohexanedimethanol.

The preferred molar ratios of the cycloaliphatic diol to the aliphatic diol are in the range from 10:90 to 60:40, preferably in the range from 20:80 to 40:60, more preferably from 30:70 to 35:65. A specific example of particularly preferred amorphous polyester is PETG Eastar® 6763, sold by Eastman, which comprises a co-polyester of terephthalic acid, about 33 mole% 1, 4-cyclohexanedimethanol and about 67 mole% ethylene glycol.

In a particularly preferred embodiment, the amorphous polyester resin in the heat-sealable layer is the same polyester resin used in the base layer.

Suitable thermoplastic resins are polyamides, polystyrenes, in particular styrene-butadiene block copolymers, polyethylenes, ionomers, ethylene/unsaturated carboxylic acid copolymers, such as ethylene/(meth)acrylic acid copolymers, ethylene/unsaturated esters copolymers, such as ethylene/vinyl acetate copolymers, ethylene/propylene copolymers, maleic anhydride-modified polyethylenes such as mod-LLDPE and ethylene/cyclic olefin copolymers, such as ethylene/norbornene copolymers. Ethylene/(meth)acrylic acid copolymers and modified- LLDPE are preferred. Specific examples of particularly preferred thermoplastic resins are Primacor 3440, sold by Dow, which is an ethylene/acrylic acid copolymer with a co-monomer content acrylic acid 9.7%and BYNEL 4104 (2006) by DuPont, a Maleic Anhydride-Modified LLDPE.

Suitable further polyesters are those deriving from one or more aliphatic diols, preferably ethylene glycol and/or cyclohexandimethanols, and an aromatic dicarboxylic acid, preferably terephthalic acid. Suitable further polyesters are preferably characterized by an intrinsic viscosity of at least 0.75 dl/g or higher and / or by a glass transition temperature Tg not higher than 80°C and/or a melting point higher than 240°C. A suitable method for the determination of the intrinsic viscosity is ASTM method D4603-03. A suitable method for the determination of the glass transition temperature is ASTM method D3418. A suitable method for the determination of the melting point is ASTM method D3418.

Polyethylene terephthalate (PET) is preferred. Specific examples of further polyesters are the PET named Eastapak co-polyester 9921, sold by Eastman Chemical or RAMAPET N180 by Indorama Polyester.

The amount of the first amorphous polyester in the heat-sealable layer of the multilayer film according to the present invention is generally from 25% to 70% by weight with respect to the total weight of the heat-sealable layer, preferably from 40 to 60% by weight. Specific preferred amounts are about 40%, and about 60% by weight.

The amount of thermoplastic resin in the heat-sealable layer of the multilayer film according to the present invention is generally from 10% to 20% by weight with respect to the total weight of the heat-sealable layer, preferably about 15% by weight.

The amount of the further polyester in the heat-sealable layer of the multilayer film according to the present invention is generally from 20% to 60% by weight with respect to the total weight of the heat-sealable layer, preferably from 25 to 50%. Specific preferred amounts are about 25%, about 45%, and about 60% by weight. In a preferred embodiment, the heat-sealable layer a) comprises from about 25 to 70% by weight of the amorphous polyester, from 10 to 20% by weight of the thermoplastic resin and from 20% to 60% by weight of the further polyester.

In a particularly preferred embodiment the heat sealable layer a) comprises from about 40 to 60% by weight of the first amorphous polyester, from 25 to 50% by weight of the further polyester and from 10 to 20% by weight of the thermoplastic resin.

Specific examples of the blends of at least an amorphous polyester, at least a thermoplastic resin and at least a further polyester in the heat-sealable layer a) are:

> i) first amorphous polyester 60%; thermoplastic resin 15%; further polyester 25%;
> ii) first amorphous polyester 40%; thermoplastic resin 15%; further polyester 45%; and
> iii) first amorphous polyester 25%; thermoplastic resin 15%; further polyester 60%.

A particularly preferred ternary blend for layer a) consists of 60% of a PETG, 15% of a modified LLDPE and 25% of a PET.

Another particularly preferred ternary blend for layer a) consists of 60% of a PETG, 15% of an ethylene / acrylic acid copolymer and 25% of a PET.

Preferably the thickness of the sealing layer (a) is from 0.5 to 25 microns, preferably from 1 to 20 microns, more preferably from 1 to 15 microns, even more preferably from 2 to 10 microns.

The thickness percentage ratio of the heat sealable polyester layer a) to the film total thickness is generally from 2 to 30%, preferably from 3 to 25% or from 6 to 20%.

The thickness percentage ratio of the heat sealable polyester layer a) to the film total thickness is generally lower than 30%, than 25%, than 20%, than 15% or than 10%.

The inner polyester base layer b) of the films used in the present invention comprises at least a polyester having an intrinsic viscosity higher than 0.75 dl/g.

Preferably, the base layer of the film comprises a polyester having an intrinsic viscosity higher than 0.78 dl/g, more preferably of at least 0.80 dl/g.

The polyester resin used as the starting material for the base layer b) may also have an intrinsic viscosity lower than 0.75 dl/g provided that its intrinsic viscosity after extrusion is higher than this value. For instance, the intrinsic viscosity of the polyester resin could be increased during the extrusion process by means of suitable additives, like so-called "chain extenders". Suitable chain-extenders are for instance those described in EP372846.

Suitable polyester resins are, for instance, polyesters of ethylene glycol and terephthalic acid, i.e. poly(ethylene terephthalate) (PET). Preference is given to polyesters, which contain ethylene units and include, based on the dicarboxylate units, at least 90 mol%, more preferably at least 95 mol%, of terephthalate units. The remaining monomer units are selected from other dicarboxylic acids or diols. Suitable other aromatic dicarboxylic acids are preferably isophthalic acid, phthalic acid, 2, 5-, 2, 6- or 2, 7-naphthalenedicarboxylic acid. Of the cycloaliphatic dicarboxylic acids, mention should be made of cyclohexanedicarboxylic acids (in particular cyclohexane-1, 4-dicarboxylic acid). Of the aliphatic dicarboxylic acids, the (C3-C19) alkanedioic acids are particularly suitable, in particular succinic acid, sebacic acid, adipic acid, azelaic acid, suberic acid or pimelic acid.

Suitable other aliphatic diols are, for example aliphatic diols such as ethylene glycol, diethylene glycol, triethylene glycol, propylene glycol, 1,3-butane diol, 1,4-butane diol, 1,5-pentane diol, 2,2-dimethy1-1,3-propane diol, neopentyl glycol and 1,6-hexane diol, and cycloaliphatic diols such as 1,4-cydohexanedimethanol and 1,4-cydohexane diol, optionally heteroatom-containing diols having one or more rings. Mixtures or blends of homo- and/or co-polyesters can be used for the base layer b) provided the polyester having an I.V. higher than 0.75 dl/g represents the major proportion of the base layer. The base layer b) comprises higher than 50%, preferably higher than 60%, 70%, 80%, 85%, 90%, 95% by weight of a polyester having an I.V. higher than 0.75 dl/g, based on the total weight of the base layer. Any homo- and/or co-polyester can be blended with the polyester resin having an I.V. higher than 0.75 dl/g in the base layer b).

Preferably, the base layer comprises higher than 50%, 60%, 70%, 80%, 85%, 90%, 95% by weight of a PET having an I.V. of at least 0.80 dl/g.

Examples of polyesters suitable for layer b) are PET 9921W ® sold by Voridian, RAMAPET N180, Indorama which have a melting point Tm of 245°C and an I.V. of 0.80 dl/g or EASTAPAK 9921 by Eastman Chemical having a Tm of 238°C and an I.V. of 0.8 dl/g.

Suitable mixtures for the base layer b) may comprise at least 50%, 60%, 70%, 80%, 85%, 90%, 95% of the polyester resin having an I.V. higher than 0.75 dl/g and not more than 50%, 40%, 30%, 20%, 15%, 10%, 5% of an amorphous polyester resin. The amorphous polyester used in the base layer b) may be the same as or different from the amorphous polyester used in the heat-sealable layer a).

Suitable amorphous polyester resins for use in the base layer b) are co-polyesters of terephthalic acid with an aliphatic diol and a cycloaliphatic diol, especially ethylene glycol and 1,4-cydohexanedimethanol, like the PETG Eastar 6763 sold by Eastman Chemical.

Suitable base layers b) comprise at least 50%, 60%, 70%. 80%, 85%, 90%, 95% of the polyester resin having an I.V. higher than 0.75 dl/g and not more than 50%, 40%, 30%, 20%, 15%, 10%, 5% of an amorphous polyester of terephthalic acid with ethylene glycol and 1,4-cydohexanedimethanol.

In one embodiment, layer b) consists of polyester(s).

Thermoformability of the film can be further improved by incorporating, preferably in the base layer, a plasticizer. Suitable plasticizers include aromatic dicarboxylic acid esters such as dimethyl phthalate, diethyl phthalate, di-n-butyl phthalate, di-n-hexyl phthalate, di-n-heptyl phthalate, di-2-ethylhexyl phthalate, di-n-octyl phthalate, di-n-nonyl phthalate, diethyl isophthalate, di-n-butyl isophthalate, di-2-ethylhexyl isophthalate, diethyl terephthalate, di-n-butyl terephthalate, di-2-ethylhexyl terephthalate, etc.; phosphoric acid esters such as triethyl phosphate, tri-n-butyl phosphate, trioctyl phosphate, cresyl phosphate, etc.; sebacic acid esters such as dimethyl sebacate, diethyl sebacate, di-n-butyl sebacate, diamyl sebacate, etc.; adipic acid esters such as hexyl adipate, etc.; esters such as butyl phthalyl butyl glycolate, tributyl citrate, tetrahydrofurfuryl oleate, methyl acetyl ricinoleate, etc.; and polyethylene glycol, etc.

In one embodiment, the plasticizer is selected from aromatic dicarboxylic acid esters (particularly phthalic acid esters) because they have excellent heat resistance, can significantly improve thermformability, and are free from problems of sublimation and bleed out during film-forming process.

The melting point of the plasticizer is preferably at least 300°C or higher, more preferably at least 350°C.

The content of the plasticizer in the layer is preferably 0.01 to 5%, more preferably 0.05 to 2% based on the weight of the polymeric material of the layer.

The percentage thickness ratio of polyester base layer b) to the film total thickness is generally from 40% to 90%, preferably from 50 to 85% or from 60 to 80%.

The percentage thickness ratio of the polyester base layer b) to the film total thickness is preferably higher than 50%, preferably higher than 60%, 65% or 70%. The film for the present use is preferably a three-layer structure that includes, in addition to a base layer b) and to a first outer heat-sealable layer a), a second outer polyester layer c) preferably directly adhered to the opposite side of the base layer b).

The outer polyester layer c) of the film preferably comprises at least 80%, preferably at least 85%, at least 90% by weight with respect to the layer weight, of one or more polyesters.

In one embodiment, layer c) consists of polyester(s).

The one or more polyester resin of layer c) may be the same as the resin of the base layer b) or different, preferably the same.

Preferably, the second outer polyester layer c) comprises polyester(s) characterized by an intrinsic viscosity of at least 0.75 dl/g or higher and/or by a glass transition temperature Tg not higher than 80°C and/or a melting point higher than 240°C. Examples of suitable polyesters for the outer layer c) are EASTAPAK 9921 by Eastman Chemical or RAMAPET N180 by Indorama Polyester.

The thickness of the outer layer c) is generally between about 5 and 40%, preferably between 10 and 35%, more preferably 15 and 30% of the total thickness of the film. The outer layer c) may have a thickness of up to about 25 microns, preferably up to about 15 microns or 10 microns, more preferably between about 0.5 and 10 microns, and more preferably between about 0.5 and 7 microns.

The thickness of the two outer layers may be the same or different.

One or more of the layers of the film of the present invention may contain any of the additives conventionally employed in the manufacture of polymeric films. Thus, agents such as pigments, lubricants, anti-oxidants, radical scavengers, UV absorbers, thermal stabilizers, anti-blocking agents, surface-active agents, slip aids, optical brighteners, gloss improvers, viscosity modifiers may be incorporated as appropriate.

In particular, to improve the processing of the film in high speed packaging equipment, slip and/or anti-blocking agents may be added to one or both of the outer layers. The additives may be added in the form of a concentrate in a polyester carrier resin. The amount of additive is typically in the order of 0.2 to 5% by weight of the total weight of the layer.

The outer layer c) may have a thickness of up to about 25 microns, preferably up to about 15 microns, more preferably between 0.5 and 10 microns, and more preferably between about 0.5 and 7 microns. The thickness of the two outer layers may be the same or different.

The films for the present use may have any total thickness from 10 to 100 microns, from 15 to 75 microns, more preferably from 15 to 50 microns or from 15 to 35 microns.

Preferably, the films for the present use have a thickness lower than 50, 40, 35, 30 or 25 microns.

Preferably, the films have a thickness higher than 15 microns.

Preferably, the films have a thickness from 10 to 100 microns, from 15 to 75 microns, more preferably from 15 to 50 microns or from 15 to 35 microns.

Thicker films will be used for packaging products of higher profile while thinner film are sufficient and preferred in order to vacuum skin package products with a shallow profile. In particular, thicker films are suitable for demanding applications like packaging of high profile products and/or with irregular and sharp surfaces, such as bone-in meat or frozen products or crabs and the like.

The polyester films of the present invention are advantageous with respect to current VSP films on the market, providing comparable performances with lower thicknesses.

The polyester film for the use of the present invention may comprise the base layer b), a first outer heat-sealable layer a) and a second outer layer c), in which the second outer layer c) comprises a polyester resin different from the resin used both in the base layer and in the heat-sealable layer.

Alternatively, the polyester film may comprise the base layer b) and two outer heat-sealable layers a) comprising the same amorphous polyester or the same crystalline polyester having a melting temperature not higher than the melting temperature of the polyester of the base layer.

Alternatively, the polyester film may comprise the base layer b), a first outer heat-sealable layer a) and a second outer layer c), in which the second outer layer c) comprises the same polyester resin as the base layer b).

In one embodiment, the polyester film for the use of the invention comprises a base layer b) comprising a polyester having an intrinsic viscosity higher than 0.75 dl/g, a first outer heat-sealable layer a) comprising an amorphous polyester and a second outer layer c) comprising the same polyester resin as the base layer.

In one embodiment, the polyester film for the use of the invention comprises a base layer b) comprising a polyester having an intrinsic viscosity higher than 0.75 dl/g, a first outer heat-sealable layer a) comprising a ternary blend of an amorphous polyester, a thermoplastic resin and a further polyester, and a second outer layer c) comprising the same polyester resin as the base layer.

Preferably, the polyester film comprises a base layer b) comprising at least 50%, 60%, 70%, 80%, 85%, 90%, 95% of the polyester resin having an I.V. higher than 0.75 dl/g and no more than 50%, 40%, 30%, 20%, 15%, 10%, 5% of an amorphous polyester, a first outer heat-sealable layer a) comprising an amorphous polyester and a second outer layer c) comprising the same polyester resin as the base layer. Preferably, the amorphous polyester in the base layer is the same as the amorphous polyester in the heat-sealable layer.

In one embodiment, the polyester film for the present use comprises:

- a heat sealable layer a) comprising

    from about 25% to 70% by weight of at least a first amorphous polyester having a melting temperature not higher than the melting temperature of the polyester of the base layer b),
    from 10% to 20% by weight of at least a thermoplastic resin selected from polyamides, polystyrenes, polyethylenes, ionomers, ethylene/unsaturated carboxylic acid copolymers, ethylene/unsaturated esters copolymers, ethylene/propylene copolymers, maleic anhydride-modified polyethylene and ethylene/cyclic olefin copolymers, preferably a maleic anhydride-modified polyethylene and
    from 20% to 60% by weight of at least a further polyester characterized by an intrinsic viscosity of at least 0.75 dl/g or higher and/or by a glass transition temperature Tg not higher than 80°C and/or a melting point higher than 240°C; and/or

- an inner polyester base layer b) comprising an admixture of at least 50% of a polyester resin having an I.V. higher than 0.75 dl/g, and at most 50% of an amorphous polyester; and/or
- an outer polyester layer c) comprising a polyester characterized by an intrinsic viscosity of at least 0.75 dl/g or higher and/or by a glass transition temperature Tg not higher than 80°C and/or a melting point higher than 240°C.

In one embodiment, the polyester film for the present use consists of:

- a heat sealable layer a) comprising

    from about 25% to 70% by weight of at least a first amorphous polyester having a melting temperature not higher than the melting temperature of the polyester of the base layer b),
    from 10% to 20% by weight of at least a thermoplastic resin selected from polyamides, polystyrenes, polyethylenes, ionomers, ethylene/unsaturated carboxylic acid copolymers, ethylene/unsaturated esters copolymers, ethylene/propylene copolymers, maleic anhydride-modified polyethylene and ethylene/cyclic olefin copolymers, preferably a maleic anhydride-modified polyethylene and
    from 20% to 60% by weight of at least a further polyester characterized by an intrinsic viscosity of at least 0.75 dl/g or higher and/or by a glass transition temperature Tg not higher than 80°C and/or a melting point higher than 240°C;

- an inner polyester base layer b) comprising an admixture of at least 50% of a polyester resin having an I.V. higher than 0.75 dl/g, and at most 50% of an amorphous polyester; and
- an outer polyester layer c) comprising a polyester characterized by an intrinsic viscosity of at least 0.75 dl/g or higher and/or by a glass transition temperature Tg not higher than 80°C and/or a melting point higher than 240°C.

In one embodiment, the polyester film for the present use consists of

- a heat sealable layer a) consisting of

    from about 40% to 70% by weight of at least a first amorphous polyester having a melting temperature not higher than the melting temperature of the polyester of the base layer b),
    from 10% to 20% by weight of at least a thermoplastic resin selected from ethylene/unsaturated carboxylic acid copolymers, ethylene/unsaturated esters copolymers and maleic anhydride-modified polyethylene and
    from 20% to 50% by weight of at least a further polyester characterized by an intrinsic viscosity of at least 0.75 dl/g or higher and/or by a glass transition temperature Tg not higher than 80°C and/or a melting point higher than 240°C;

- an inner polyester base layer b) consisting of an admixture of at least 55% of a polyester resin having an I.V. higher than 0.75 dl/g, and at most 45% of an amorphous polyester; and
- an outer polyester layer c) comprising at least 95% of the same polyester characterized by an intrinsic viscosity of at least 0.75 dl/g of the base layer b). Preferred films for the present use are films consisting of
- an outer heat sealable layer a) consisting of about 60% by weight of a PETG, 25% by weight of a PET and 15% by weight of a mod-LLDPE or of an EAA;
- an inner base layer b) consisting of about 60% by weight of a PET having an I.V. measured according to ASTM D4603-03 higher than 0.75 dl/g and 40% by weight of a PETG; and
- an outer polyester layer c) consisting of about 98% by weight of the same PET of the base layer and 2% by weight of a PETG.

Exemplary films, usable in the present invention and their manufacturing processes are described in WO2012160142 and WO2007093495.

Other possible films and their preparation are disclosed in WO2009013284 (e.g. film of Ex. 2) and WO2013080143 in the name of Cryovac.

The polyester film for the present use is characterized by an elastic modulus of at least 20,000 Kg/cm$^2$ in both LD and TD, a tensile strength of at least 1500 Kg/cm$^2$ in both LD and TD and/or an elongation at break of at least 105% in both LD and TD (measured according to ASTM D882 at 23°C).

The polyester film for the present use can be manufactured according to any process known in the art for producing a biaxially oriented film, for example a tubular or a flat film orientation process

The film, preferably the three layers film, can be prepared by coextrusion, by coating or by extrusion coating, preferably by coextrusion according to a tubular process or a flat process.

In a tubular process, also known as "double bubble" process, simultaneous biaxial orientation is obtained by extruding a thermoplastic resin tube, which is subsequently quenched, reheated and then expanded by internal gas pressure to induce transverse orientation, and wound at a rate, which will induce longitudinal orientation. An example of an equipment suitable for this technique is disclosed in US4841605.

In a flat film process, the film-forming thermoplastic resins are extruded through a T-die and rapidly quenched upon a chill roll to ensure that the resins are quenched to the amorphous state. Orientation is then effected by stretching, simultaneously or sequentially, preferably simultaneously, the quenched extrudate at a temperature above the glass transition temperature of the thermoplastic resin.

In the sequential flat orientation method a flat, quenched extrudate is firstly oriented in one direction, usually the longitudinal direction, i.e. the forward direction through the film stretching machine, and then in the transverse direction. Longitudinal stretching of the extrudate is conveniently carried out over a set of rotating rolls (MDO), which rotate at different speeds. At least one of the first pairs of rolls is heated, for example by inner circulation of hot oil. Transverse stretching is usually carried out in a tenter apparatus (TDO), which comprises a certain number of heating means and suitable stretching means.

In a simultaneous flat orientation the resulting hot and clipped sheet is directed to the stretching zone of the simultaneous tenter. Any simultaneous stretching means can be used in said zone. Preferably, however the clips are propelled throughout the opposed loops of the tenter frame by means of a linear synchronous motor. A suitable line for simultaneous stretching with linear motor technology has been designed by Bruckner GmbH and advertised as LISIM line. An alternative line for simultaneous stretching of the extruded flat tape is the DMT line, based on a pantograph, equipped with two separated monorails on each side of the orientation unit. The configuration of the tenter can be varied depending on the stretching ratios desired. In the subsequent annealing step, the biaxially oriented film may be dimensionally stabilized by heat-treatment at a temperature below the melting temperature of the film.

Preferably, the polyester film for the use of the invention is manufactured according to a flat coextrusion. The polymers for the base layer b), for the heat-sealable outer layer a) and for the second outer layer c) are fed to separate extruders. The melts are extruded through a multilayer T-die and quenched over a chill roll. The so formed cast is then biaxially oriented, preferably simultaneously biaxially oriented.

In case of sequential orientation, longitudinal stretching (LD or Machine Direction Orientation) of the extrudate is conveniently carried out at a temperature range from 60 to 120°C, preferably 70 to 100°C and in the transverse stretching (Transverse Direction Orientation), in the range from 90°C (preheating zone) to 130°C (stretching zone), preferably from 90°C (preheating zone) to 110°C (stretching zone). The longitudinal stretching ratio is in the range from 2.0:1 to 5.0:1, preferably from 2.3:1 to 4.8:1. The transverse stretching ratio is generally in the range from 2.4:1 to 6.0:1, preferably from 2.6:1 to 5.5:1.

However, preferably, the polyester films for the use of the present invention are simultaneously oriented.

The temperatures for the simultaneous orientation are from 90 to 110°C (preheating zones) and from 90 to 110°C (stretching zones), preferably from 90 to 100°C and from 93°C to 103°C respectively.

The stretching ratios in LD are from 2.5:1 to 5:1, preferably from 3.0:1 to 4.2:1, and in TD from 2.5:1 to 6:1, preferably from 3.2:1 to 4.4:1.

Annealing is carried out at a temperature of from 160 to 250°C, preferably from 180 to 240°C, even more preferably from 220 to 240°C. The annealing temperature can be used to fine tuning the final shrink properties of the film.

Preferably, the polyester film for the use according to the present invention is biaxially oriented and heat-set.

Preferably, the polyester film for the present use has a free shrink percentage lower than 10% in both LD and TD (measured as described in the experimental section, in oven at 180°C, 5 minutes)

Preferably, the biaxially oriented film for use in a vacuum skin packaging method is heat-set up to a total free shrink percentage lower than 15%, preferably lower than 10% or 5%.

The bi-oriented film is finally cooled and wound up in a customary manner.

Other methods of manufacturing the present films include coating the heat-sealable polymer of layer a) onto a substrate layer, comprising layers b) and c). Coating may be effected using any suitable coating technique, including gravure roll coating, reverse roll coating, dip coating, bead coating, extrusion-coating, melt-coating or electrostatic spray coating. Coating may be conducted "off-line", i.e. as a separate step after stretching and subsequent heat-setting of the base layer, or "in-line", i.e. before, during or between stretching operation(s).

Prior to application of the heat-sealable layer onto the substrate, the exposed surface of the substrate may, if desired, be subjected to a chemical or physical surface-modifying treatment to improve the bond between that surface and the subsequently applied layer. For example, the exposed surface may be subjected to a high voltage electrical stress accompanied by corona discharge. Alternatively, the exposed surface may be pretreated with an agent known in the art to have a solvent or swelling action, such as a halogenated phenol dissolved in a common organic solvent e.g. a solution of p-chloro-m- cresol, 2,4-dichlorophenol, 2,4,5- or 2,4,6-trichlorophenol or 4-chlororesorcinol in acetone or methanol.

The polyester films for the use of the present invention may be printed. Printing the material before thermoforming improves consumer appeal.

The Applicant has surprisingly found that the polyester film described above shows so good formability properties that can be used as top web in vacuum skin packaging (VSP) possibly together with a bottom made of the same film, of a CPET forming web or of C-PET pre-made trays.

As the person skilled in VSP is aware of, this technology is very demanding in terms of material formability and strength. Conventional VSP materials generally incorporate high amount of formable polyolefin such as ionomers or HDPE, possibly together with strengthening resins such as polyamides, and it is thus quite surprising that the present polyester films may perform so well in VSP.

The polyester film for the present use, having a peelable sealant, provides for self-venting during cooking.

The present films, due to the polyester-based composition, provide for final packages with excellent optics.

A second object of the present invention is a vacuum skin packaging process for the manufacture of a microwaveable, an ovenable or, preferably, a dual ovenable vacuum skin package, which comprises:

- providing a dual ovenable top web,
- providing a microwaveable, an ovenable or, preferably, a dual ovenable support,
- disposing the top web over the support,
- disposing a food product onto the support,

- heating the top web and molding it down upon and around the product and against the support, the space between the heated top film and the support having been evacuated, to form a tight skin around the product, and
- tight sealing said top web over the entire surface of the support not covered by the product by differential air pressure, thus providing a vacuum skin package, characterized in that said dual ovenable top web is a biaxially oriented polyester film as previously described.

In more detail, in the present VSP process the top web is fed to the upper section of a heated vacuum chamber comprising an upper and a lower section, and a vacuum is applied thereto from the outside, thereby drawing the skin-forming film into a concave form against the inwardly sloping walls of the upper section of the chamber and against the ports contained in the horizontal wall portion thereof (the top of the dome). Any conventional vacuum pump can be used to apply the vacuum and, preferably, the top web is suitably pre-heated prior to the foregoing operation to render it more formable and thus better able to assume a concave shape in the upper section of the vacuum chamber.

Preferably, with Rollstock machines, pre-heating of the polyester films of the present invention is performed at temperatures from 120 to 140°C, more preferably at about 130°C.

The product to be packaged is positioned on the support and placed on a platform that is carried in the in the lower section of the vacuum chamber, just below the dome. The support can be shaped off-line or, alternatively, in-line at an initial station on the vacuum packaging machine. Then the vacuum chamber is closed by moving the upper section down onto the lower one and during this whole sequence of operations vacuum is constantly applied to retain the concave shape of the film. Once the vacuum chamber is closed, vacuum is applied also in the lower section of the vacuum chamber in order to evacuate the air in the space between the support and the top skin-forming film. In the upper section of the vacuum chamber vacuum continues to be applied to retain the concave shape of the skin-forming film until the area between the support and the skin-forming film is evacuated, then it is released with inlet of air and returning to atmospheric pressure. Thus the softened top skin-forming web will collapse over the product and the support, as the atmosphere pushing the top skin-forming web from the top and the vacuum pulling it from the bottom will cooperatively work to have the top skin-forming web substantially conform to the shape of the product to be packaged and on the entire free surface of the support. Optionally, after the evacuation step has been completed, a suitably selected purging gas or gas mixture could be flushed over the product to generate a very low residual gas pressure into the package. In some rare instances heat-sealing bars or other sealing means can be present in the vacuum chamber to carry out a perimeter heat-seal of the skin-forming film to the support.

As mentioned, the support can be shaped off-line and in such a case the VSP machine is referred to as a Tray Skin machine or, alternatively, the support can be shaped in-line at an initial station on the vacuum packaging machine that is called "Rollstock" machine.

Preferred machines for carrying out the present VSP process according to the invention are supplied for instance by Multivac, Mondini, Sealpac and Ulma.

A recently developed skin packaging process is described in WO2009141214, EP2722279, and EP2459448. In such process, the support used for the vacuum skin process is perforated in order to get a more efficient vacuum. Such process may be carried out by using, for instance, a machine named TRAVE E340, Trave 1000 Darfresh or Trave 590XL Darfresh by Mondini.

Preferably, the temperature of the dome is set from 200°C to 240°C, more preferably from 225°C to 235°C.

A third object of the present invention is a microwaveable, an ovenable or, preferably, a dual ovenable vacuum skin package comprising:

- a microwaveable, an ovenable or, preferably, a dual ovenable support,
- a food product loaded onto said support and
- a top web draped over the product and welded to the surface of the support not covered by the product,

characterized in that the top web is a dual ovenable biaxially oriented polyester film as previously described.

In the VSP package of the present invention, the support can be flat or shaped, e.g. a plate, a tray, a bowl, and may be rigid, semi-rigid or flexible. The support can be a pre-made support manufactured off-line before the packaging process or it can be made in-line by thermoforming during the packaging process.

In the VSP package of the present invention, the support is preferably dual ovenable, such as a polyester support. The resulting package is thus dual ovenable, namely it is suitable for both microwave and conventional oven cooking.

In alternative, the support may be suitable either for microwave oven or for conventional oven only. In such a case, the resulting package is only suitable for microwave or conventional oven cooking respectively.

The support can be a mono- or a multilayer material.

If multilayer, the support may comprise a heat sealable layer, to allow sealing of the top web to the part of the support not covered by the product, and at least one bulk thermoplastic layer to provide good mechanical properties.

In case the support includes a sealing layer, the sealing layer preferably comprises or consists of polyesters, preferably low melting polyesters, such as PETG, which is an amorphous co-polyester of terephthalic acid with ethylene glycol and 1, 4-cyclohexaned imethanol.

The monolayer support or the at least one bulk layer in case of a multilayer support, comprises or consists of a polyester, preferably a material selected from the group consisting of polyethylene terephthalate (PET), crystalline polyethylene terephthalate (CPET), amorphous polyethylene terephthalate (APET), polyethylene terephthalate glycol (PETG), and blends thereof.

The support may be foamed or un-foamed.

In one embodiment, the support is made of cardboard coated with at least a polyester layer, preferably a polyester layer comprising at least a sealable polyester, more preferable a polyester layer having the same composition of the outer heat sealable polyester layer a) as previously defined. The polyester layer may be applied onto the cardboard surface by conventional techniques, for instance by skin packaging.

In one embodiment, the support is a composite made of cardboard coupled with the three layers dual ovenable biaxially oriented film used in the present invention as previously defined. The film is coupled to the cardboard with the outer polyester layer c) facing the cardboard. The film is coupled to the cardboard by conventional techniques such as for instance by glue lamination or hot lamination or other methods known to skilled person.

In one embodiment, preferably for use in conventional oven, the support is made of coated or un-coated aluminum.

In case of coated aluminum, the coating is made of a heat sealable material.

In one embodiment, the support is compostable, for instance it may include a bulk layer of a biodegradable resin - such as polylactic acid derivatives- and a sealing layer of e.g. PETG.

Preferably, the compostable support is made of polylactic acid and derivatives thereof.

As used herein, the term "biodegradable" refers to a product or a material that has the ability to break down, safely and relatively quickly, by biological means, into the raw materials of nature and disappear into the environment. These products can be solids biodegrading into the soil (which we also refer to as compostable), or liquids biodegrading into water. Biodegradable plastic is intended to break up when exposed to microorganisms.

As used herein, the term "compostable" refers to a product that can be placed into a composition of decaying biodegradable materials, and eventually turned into a nutrient-rich material. It is almost synonymous with "biodegradable", except it is limited to solid materials and does not refer to liquids.

The support may be pigmented.

In one embodiment, the support is a dual ovenable flexible film (bottom web), preferably a thermoformed in-line dual ovenable flexible film. Preferably, the flexible film of the bottom web is a film as previously described.

In one embodiment, in the VSP package of the present invention, both the top web and the bottom web are made of dual ovenable flexible films, in which at least the top web is a film as previously described. More preferably, both the top web and the bottom web are made of a film as previously described.

In one embodiment, both the top web and the bottom web are flexible films and they preferably have the same thickness, preferably from 20 to 35 microns, more preferably from 25 to 33 microns.

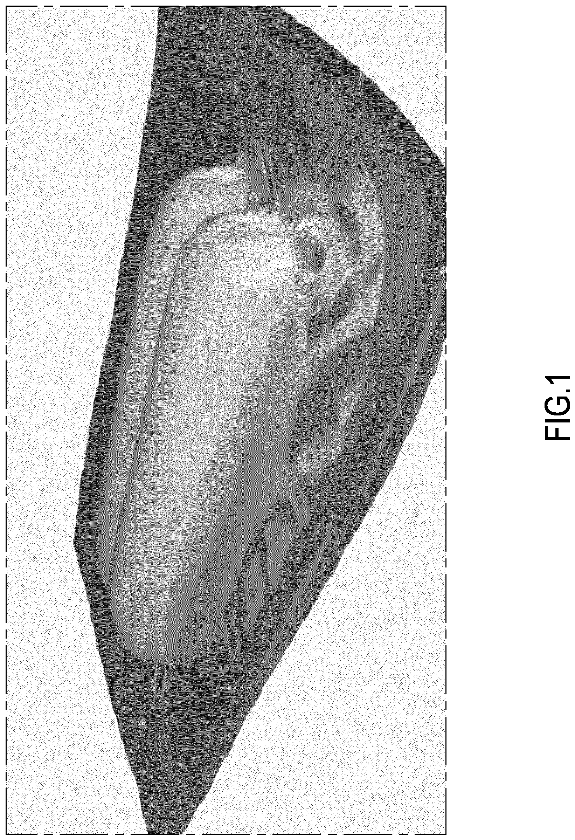

An example of this VSP package is shown in Figure 1 and described in the present experimental section, under Example 1.

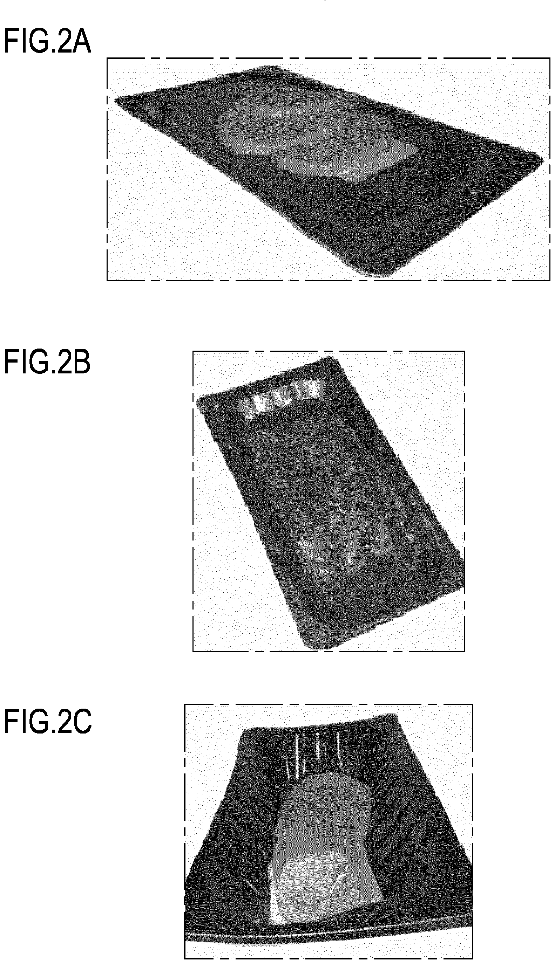

In alternative, the bottom web may be a C-PET forming web, which is thermoformed in line, as illustrated under Example 2 and in Fig. 2A to 2C.

In one embodiment, the VSP package of the present invention comprises the present film as top web and a pre-made polyester support, preferably a C-PET pre-made tray.

In one embodiment, the VSP package of the present invention comprises the present film as top web and a thermoformed in-line C-PET foamed support.

In a preferred embodiment, the VSP package is made from the same dual ovenable biaxially oriented polyester film previously described, used as both top and bottom web.

Food products that can be advantageously packaged in the VSP packages of the present invention are, in a non-limiting list, fish (whole or portioned), meat, particularly fresh red meat, processed meat, poultry, pork, lamb, bakery (also partially baked or frozen), seafood, stabilized vegetables or ready-meals.

The present vacuum skin packages are preferably dual-ovenable, namely they withstand re-heat and cook-in both in a microwave oven and in a conventional oven, not only at moderate but also at high temperatures (e.g. up to 200 °C for 1 hour). During cooking, the present package inflates ("ballooning") up to the opening of the seal on one side ("self-venting") with the excess of vapor generated during the cooking getting out. After cooking, the package can be easily opened by hands. The present preferred vacuum skin packages provide all the advantages of skin packages with the added cooking performance in conventional, convection and microwave oven.

In particular, these packages have an improved appearance as the skin films are more formable than similar films present on the market (Mylar® Skin) and thus conform better to the products, without leaving unsealed areas around the packaged product or self-sealed portions in the web. Having no or very few unsealed portions, the package results in a diminished degradation of the product and in a better appearance.

Additionally, these packages provide for a range of benefits in the cooking process such as reduced cooking times, food flavor, succulence and texture enhancement - because flavors and moisture are kept within the product -, and improved food appearance, as the product may be roasted in the self-vented skin package thus acquiring the golden brown color of conventional oven cooked food.

Furthermore, the packages of the present invention can be oven or microwave cooked directly from the freezer or refrigerator, are easy to use, as they do not require handling or preparation, thereby reducing the risks of contamination, and do not release "off-odors" as these are transformed during the cooking process.

## Examples

The present invention can be further understood by reference to the following examples that are merely illustrative and are not to be interpreted as a limitation of the scope of the present invention that is defined by the appended claims.

The polyester films used for the present VSP applications comprise the following resins:

PET1 RAMAPET N180, Indorama Polyester, copolymer of terephthalic acid, isophthalic acid and mono-ethylene glycol Density 1.4 g/cc, Intrinsic Viscosity 0.80 dl/g, Glass transition temperature 78°C, Melting point 245°C

PET2 co-polyester Eastman Chemical EASTAPAK 9921 Density 1.4 g/cc Melting point 238.0°C, I.V. 0.80 dl/g.

PETG1 Co-polyester of terephthalic acid, 1,4-cydohexane dimethanol and ethylene glycol, EASTAR PETG 6763 - Eastman Chemical Polyethylene Terephthalate/ Glycol Density 1.27 g/cc , Glass Transition 81°C, Melt Flow Rate (Cond. 200°C / 05.00 kg (G)) 2.8 g/10 min, Viscosity Solution 0.75 mPa.sec

PETG2 Masterbatch AntiBlock and Slip in Amorphous Polyethylene Terephthalate/Glycol Co-polyester of terephthalic acid, 1,4-cyclohexane dimethanol and ethylene glycol, SUKANO G dc S503 Silica 10%, Wax 6%, Bulk (Apparent) Density 1.2 g/cc, Vicat Softening Point 82°C

LLDPE-mod: BYNEL 4104 (2006) DuPont, Maleic Anhydride-Modified Ethylene/Butene Copolymer Density 0.9200 g/cc, Melt Flow Rate (Cond.190°C / 02.16 kg (E))1.10 g/10 min, Melting point 125°C

EAA: PRIMACOR 3440 Dow Ethylene/Acrylic Acid Copolymer Co-monomer content Acrylic Acid 9.7%, Density 0.938 g/cc, Melt Flow Rate 190°C/02.16 kg 10 g/10 min, Vicar softening point 76°C

In the following Tables 1 and 2, the composition (% by weight to the layer weight) of the polyester films 1 to 9 suitable for the vacuum skin packaging applications according to the present invention are shown:

Table 1

|  | Film 1 | Film 2 | Film 3 | Film 4 | Film 5 | Film 6 |
|---|---|---|---|---|---|---|
| Total thickness | 33 mic. | 22.5 mic. | 17.5 mic. | 33 mic. | 22.5 mic. | 33 mic. |
| Layer 1 Sealant layer a) | PET2 25% PETG1 60% EAA15% 4.5 mic | PET2 25% PETG1 60% EAA15% 2.6 mic | PET2 25% PETG1 60% EAA15% 2.0 mic | PET2 45% PETG1 40% EAA 15% 4.5 mic | PET2 45% PETG1 40% EAA 15% 2.6 mic | PET2 25% PETG1 60% EAA 15% 2.5 mic |
| Layer 2 Base layer b) | PET2 60% PETG1 40% 22.0 mic | PET2 60% PETG1 40% 17.3 mic | PET2 60% PETG1 40% 13.5 mic | PET2 60% PETG1 40% 22.0 mic | PET2 60% PETG1 40% 17.3 mic | PET2 60% PETG1 40% 24 mic |
| Layer 3 outer layer c) | PET2 98% PETG2 2% 6.5 mic | PET2 98% PETG2 2% 2.6 mic | PET2 98% PETG2 2% 2.0 mic | PET2 98% PETG2 2% 6.5 mic | PET2 98% PETG2 2% 2.6 mic | PET2 98% PETG2 2% 6.5 mic |

Table 2

|  | Film 7 | Film 8 | Film 9 |
|---|---|---|---|

(continued)

| Total thickness | 33 mic. | 25 mic. | 17.5 mic. |
|---|---|---|---|
| Layer 1 Sealant layer a) | 60% PETG1 15% LLDPE-mod 25% PET1 2.5 mic. | 60% PETG1 15% LLDPE-mod 25% PET1 2.3 mic. | 60% PETG1 15% LLDPE-mod 25% PET1 2.0 mic. |
| Layer 2 Base layer b) | 60% PETG1 40% PETG1 24.0 mic. | 60% PETG1 40% PETG1 19.0 mic. | 60% PETG1 40% PETG1 13.5 mic. |
| Layer 3 outer layer c) | 98% PETG1 2% PETG2 6.5 mic. | 98% PETG1 2% PETG2 3.7 mic. | 98% PETG1 2% PETG2 2.0 mic. |

Films 1 to 9 were manufactured on tenterframe LISIM® line, or in alternative on a MESIM stretching line, according to the following methodology and conditions. The three layers were coextruded through a three-layer feedblock and then distributed through a flat die, having a multimanifold system. The melt out of the die was quenched onto a chill roll; electrostatic pinning was used to favor the intimate contact between melt and chill roll. The so formed cast was then biaxially oriented. The stretching was done simultaneously, at orientation ratios of 3.6:1 in MD and of 3.8:1 in TD, and at temperature of 95°C (preheating zones) and of 98°C (stretching zones). Before oven exit, the polyester film was annealed at temperature from 230°C to 235°C. The bi-oriented film was finally cooled, edge trimmed and wound into mill logs.

Comparative films

Mylar® Skin is a commercial dual ovenable polyester film by DuPont Teijin. No detailed information is available on the polyester nature and properties.

Test methods

Free shrink%: square specimens of 12 cm x 12 cm were cut from the film under test. On the surface of each specimen, a centered square of 10 cm x 10 cm was sketched with a pencil.
The specimens were put in a laboratory oven, unrestrained, under air for 5 minutes at 180°C. The dimensional change of the sketched square of each sample was measured in both LD and TD directions.
The percent of free shrink was calculated, for each one of LD and TD directions, with the formula

$$[(Lo - Lf)/Lo] \times 100$$

wherein Lo is the initial length of the film specimen in mm before the test and Lf is the length of the film specimen in mm after shrinking.

Total free shrink%: it is the sum of the free shrink% in LD and TD of the film sample measured as described above.
Elastic Modulus: (at 23°C) ASTM D882
Tensile strength and Elongation at break: (at 23°C) ASTM D882
Haze: ASTM D1003
Gloss: ASTM D2457 (angle 60°)
Tg and melting point: ASTM D3418

Formability

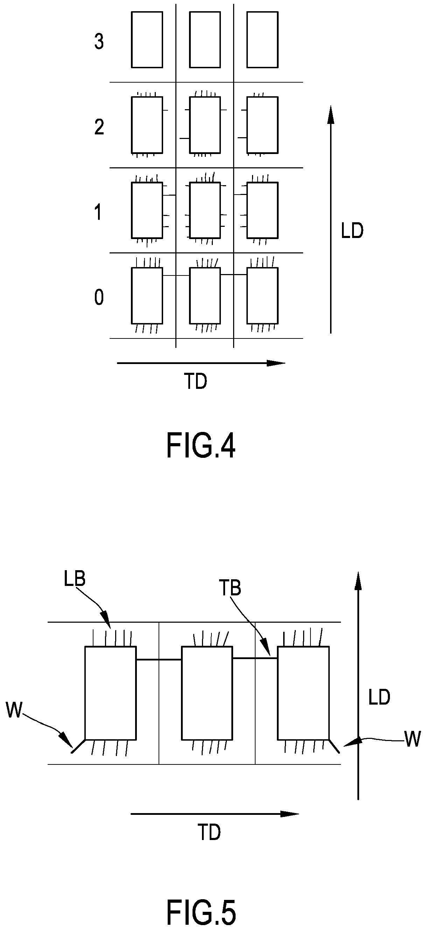

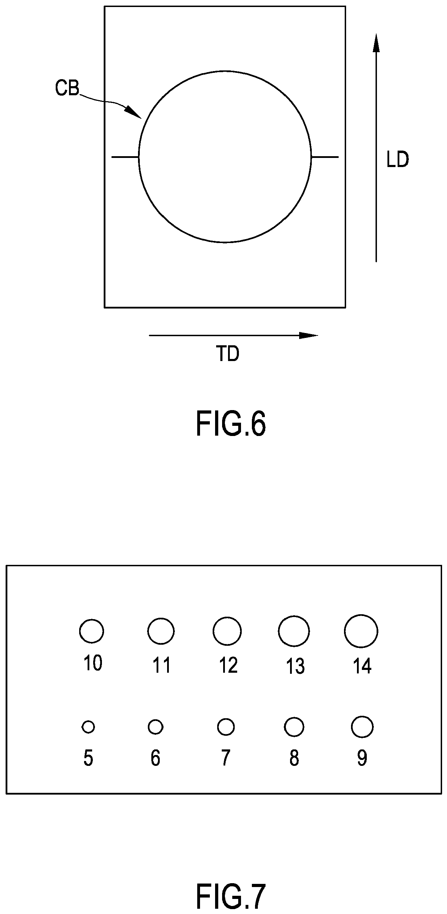

Formability by visual inspection: formability of the films was evaluated by visual inspection, looking for defects of the material in conforming to the product and to the support in the final vacuum skin package. In particular, we looked for defects as self-sealing of the top web (e.g. webbing, bridging as illustrated in Fig. 5 and 6) and the presence of unsealed areas around the product.
Formability by evaluation of sealing defects: the formability of the films was evaluated in terms of incidence of sealing defects, i.e. bridging and webbing pleats (illustrated in Fig.4 to 6).
A conventional vacuum skin cycle was performed using Rollstock R570CD machine, with dome heights of 50 mm, dome temperature of 230°C, at a machine speed of 6.0 cycles/min, vacuum time 1 s. The bottom forming depth was 5 mm and the bottom dimensions were 250 mm x 135 mm.

The packaged products were parallelepiped shaped (105 mm wide x 190 mm long x 30 mm high) and circular shaped (diameter 105 mm, height 28 mm) plastic blocks.

The machine processed 3 packs per cycle, 5 cycles were repeated and therefore a total of 15 packs were scored for formability by using this internal test method. After the packaging, the packs were scored by two panelists for webbing (Fig. 5- W - pleats located in the corner) and for bridging (Fig. 5 and 6, Transverse TB, Longitudinal LB and Circular CB Bridging, being 3 the best score (no webbing, no bridging) and 0 the worst score (Fig. 4).

Formability by evaluation of implosion performance: this test evaluates the ability of a VSP film to fill the cavities without breaking. A conventional VSP cycle was performed, as described above for the formability test, but the packaged products were parallelepiped shaped plastic blocks (100 mm wide x 190 mm long x 25 mm high) having, on the top surface, 10 calibrated holes of different diameters in the range from 5 to 14 mm and same depth (20 mm) (see Fig. 7). Moreover, for the implosion test, a reduction of the reventing nozzle diameter was applied through a screwed insert: the final diameter of the nozzle was 7 mm instead of 25 mm in order to allow for a slower draping of the film onto the support and the testing block. The test was repeated 30 times for each film and the average score was calculated. During the packaging tests with the plastic block, the film is subjected to a stretching stress, which increases with the area of the hole. The area of the largest hole before the film breaks was taken as index of implosion resistance of the film, as highly representative of the film skin packaging capability.

Film properties

Shrink, mechanical and optical properties of the polyester films used in the present invention are collected in the following Table 3:

Table 3

| Property | Unity | Film 7 | | Film 8 | | Film 9 | |
|---|---|---|---|---|---|---|---|
| | | LD | TD | LD | TD | LD | TD |
| Free shrink 180°C lab oven, air 5 min. | % | 6 | 4 | -- | -- | -- | -- |
| Elastic Modulus | Kg/cm$^2$ | 22,000 | 24,000 | 23,000 | 25,000 | 23,000 | 24,000 |
| Tensile strength | Kg/cm$^2$ | 1600 | 1550 | 1650 | 1700 | 1650 | 1700 |
| Elongation at break | % | 115 | 120 | 105 | 105 | 105 | 105 |
| Haze | % | 9 | | 7 | | 5.5 | |
| Gloss | g.u. | 120 | | 120 | | 125 | |

These properties were measured according to the methods described above.

Example 1

VSP packages with both top and bottom webs made of the present films (Fig. 1)

Vacuum skin packages in which both the top web and the bottom web were made of film 8 (25 microns thick) were manufactured on a Rollstock Darfresh® machine (R272CD by Multivac). The films were supplied from two rolls and fed to the machine with the sealing layers a) facing each other.

The thermoformed bottom was rectangular (250 mm long x 145 mm wide, 5 mm of depth).

Machine speed was 6.4 cycles/minute and the vacuum applied was set lower than 15 mbar, the vacuum time was 1 sec.

The temperature of the dome was 230°C and the height of the dome was 10 mm. The products packed therein were two sausages weighting about 170 g overall. As can be seen from Fig. 1, the top web conformed perfectly all around the product as a skin without forming unwanted self-sealing or unsealed areas, thus providing a hermetic and safe seal.

Example 2

VSP packages with a C-PET foamed thermoformed bottom web (Fig. 2A-2C)

In these packages, manufactured as described in Example 1, the top web was film 8 (25 microns thick) while the bottom web was a foamed C-PET web (600 microns thick).

The thermoformed bottoms were rectangular shaped, with the following dimensions:

package 2A: 250 mm long x 145 mm wide, 5 mm of depth;
package 2B: 250 mm long x 145 mm wide, 15 mm of depth;
package 2C: 250 mm long x 145 mm wide, 30 mm of depth.

The products packed therein were pork loin slices (2A), pork ribs (2B) or chicken breast (2C).

From the pictures, it can be appreciated the perfect skin adherence of the top web even with jagged irregular products (2B) or with deep trays (2C).

The packages of the present invention 2A to 2C did not show the defects of prior art packages (e.g. bridging and unsealed areas- see Fig. 3A and 3B-namely the pictures of VSP packages made from commercial Mylar® Skin as reported in the corresponding brochures).

## Claims

1. Use of a dual ovenable biaxially oriented polyester film as top web in vacuum skin packaging, said film comprising, preferably consisting of,

   - an outer heat sealable polyester layer a),
   - an inner polyester base layer b), comprising a polyester having an intrinsic viscosity (I.V.) measured according to ASTM D4603-03 higher than 0.75 dl/g, and
   - an outer polyester layer c).

2. A vacuum skin packaging process for the manufacture of a microwaveable or an ovenable or, preferably, a dual ovenable vacuum skin package, which comprises:

   - providing a dual ovenable top web,
   - providing a microwaveable, an ovenable or, preferably, a dual ovenable support,
   - disposing the top web over the support,
   - disposing a food product onto the support,
   - heating the top web and molding it down upon and around the product and against the support, the space between the heated top web and the support having been evacuated, to form a tight skin around the product, and
   - tight sealing said top web over the entire surface of the support not covered by the product by differential air pressure, thus providing a vacuum skin package, **characterized in that** said dual ovenable top web is a biaxially oriented polyester film comprising, preferably consisting of,
   - an outer heat sealable polyester layer a),
   - an inner polyester base layer b), comprising a polyester having an intrinsic viscosity (I.V.) measured according to ASTM D4603-03 higher than 0.75 dl/g, and
   - an outer polyester layer c).

3. A microwaveable, an ovenable or, preferably, a dual ovenable vacuum skin package comprising:

   - a microwaveable, an ovenable or, preferably, a dual ovenable support,
   - a food product loaded onto said support and
   - a top web draped over the product and welded to the surface of the support not covered by the product,

   **characterized in that** the top web is a dual ovenable biaxially oriented polyester film comprising, preferably consisting of

   - an outer heat sealable polyester layer a),
   - an inner polyester base layer b), comprising a polyester having an intrinsic viscosity (I.V.) measured according to ASTM D4603-03 higher than 0.75 dl/g, and
   - an outer polyester layer c).

4. The package according to claim 3 wherein the support is made of the same polyester film of the top web.

5. The package according to claim 3 wherein the support is made of a foamed C-PET.

6. The package according to any one of claims 3 to 5 wherein said food product is selected from fish, meat, processed meat, poultry, pork, lamb, bakery, seafood, stabilized vegetables or ready-meals.

7. The use, the process or the package according to any one of the previous claims, wherein the polyester film of the top web has a total thickness lower than 50 microns, preferably lower than 40 microns, more preferably lower than 35 microns, even more preferably lower than 30 microns or 25 microns.

8. The use, the process or the package according to any one of the previous claims, wherein the polyester film of the top web is coextruded.

9. The use, the process or the package according to any one of the previous claims, wherein the polyester film of the top web was simultaneously oriented.

10. The use, the process or the package according to any one of the previous claims, wherein the polyester film of the top web has a total free shrink % lower than 15%, measured according to the test method reported in the description.

11. The use, the process or the package according to any one of the previous claims, wherein the polyester of the base layer b) of the polyester film of the top web has an intrinsic viscosity (I.V.) of at least 0.8 dl/g.

12. The use, the process or the package according to any one of the previous claims, wherein the polyester film of the top web comprises

    - a heat sealable layer a) comprising

        from about 25% to 70% by weight of at least a first amorphous polyester having a melting temperature not higher than the melting temperature of the polyester of the base layer b),
        from 10% to 20% by weight of at least a thermoplastic resin selected from polyamides, polystyrenes, polyethylenes, ionomers, ethylene/unsaturated carboxylic acid copolymers, ethylene/unsaturated esters copolymers, ethylene/propylene copolymers, maleic anhydride-modified polyethylene and ethylene/cyclic olefin copolymers, preferably a maleic anhydride-modified polyethylene and
        from 20% to 60% by weight of at least a further polyester **characterized by** an intrinsic viscosity of at least 0.75 dl/g or higher and/or by a glass transition temperature Tg not higher than 80°C and/or a melting point higher than 240°C measured according to ASTM D3418; and/or

    - an inner polyester base layer b) comprising an admixture of at least 50% of a polyester resin having an I.V. higher than 0.75 dl/g, and at most 50% of an amorphous polyester; and/or
    - an outer polyester layer c) comprising a polyester **characterized by** an intrinsic viscosity of at least 0.75 dl/g or higher and/or by a glass transition temperature Tg not higher than 80°C and/or a melting point higher than 240°C measured according to ASTM D3418.

13. The use, the process or the package according to any one of the previous claims, wherein the polyester film of the top web consists of

    - a heat sealable layer a) consisting of

        from about 40% to 70% by weight of at least a first amorphous polyester having a melting temperature not higher than the melting temperature of the polyester of the base layer b),
        from 10% to 20% by weight of at least a thermoplastic resin selected from ethylene/unsaturated carboxylic acid copolymers, ethylene/unsaturated esters copolymers and maleic anhydride-modified polyethylene, and
        from 20% to 50% by weight of at least a further polyester **characterized by** an intrinsic viscosity of at least 0.75 dl/g or higher and/or by a glass transition temperature Tg not higher than 80°C and/or a melting point higher than 240°C;

    - an inner polyester base layer b) consisting of an admixture of at least 55% of a polyester resin having an I.V. higher than 0.75 dl/g and at most 45% of an amorphous polyester; and
    - an outer polyester layer c) comprising at least 95% of the same polyester **characterized by** an intrinsic viscosity of at least 0.75 dl/g of the base layer b).

14. The use, the process or the package according to any one of the previous claims, wherein in the polyester film of the top web the amorphous polyester of the base layer b) is the same amorphous polyester present in the heat-sealable layer a) and/or
the polyester of the outer polyester layer c) is the same polyester present in the base layer b) having an I.V. higher than 0.75 dl/g.

15. The use, the process or the package according to any one of the previous claims, wherein the polyester film of the top web is further **characterized by**:

- an elastic modulus of at least 20,000 Kg/cm$^2$ in both LD and TD and/or
- a tensile strength of at least 1500 Kg/cm$^2$ in both LD and TD and/or
- an elongation at break of at least 105% in both LD and TD, these parameters being measured according to ASTM D882 at 23°C.

**Patentansprüche**

1. Verwendung eines dual-ofengeeigneten, biaxial-orientierten Polyesterfilms als oberes Gewebe in einer Vakuumhaut-Verpackung, wobei der Film umfasst, vorzugsweise besteht aus:

- einer äußeren wärmeversiegelbaren Polyesterschicht a),
- einer inneren Polyester-Basisschicht b), umfassend ein Polyester mit einer intrinsischen Viskosität (I.V.), gemessen gemäß ASTM D4603-03, höher als 0,75 dl/g, und
- eine äußere Polyesterschicht c).

2. Vakuumhaut-Verpackungsprozess zum Herstellen einer mikrowellengeeigneten oder einer ofengeeigneten oder vorzugsweise dual-ofengeeigneten Vakuumhaut-Verpackung, umfassend:

- Bereitstellen eines dual-ofengeeigneten oberen Gewebes,
- Bereitstellen eines mikrowellengeeigneten, eines ofengeeigneten oder vorzugsweise eines dual-ofengeeigneten Trägers,
- Anordnen des oberen Gewebes über dem Träger,
- Anordnen eines Lebensmittel-Produkts an dem Träger,
- Erwärmen des oberen Gewebes und Herabschmelzen davon auf und um das Produkt herum und gegen den Träger, wobei der Raum zwischen dem erwärmten oberen Gewebe und dem Träger evakuiert worden ist, um eine enge Haut um das Produkt herum zu bilden, und
- enges Versiegeln des oberen Gewebes über der gesamten Fläche des Trägers, welche nicht von dem Produkt bedeckt ist, durch differentiellen Luftdruck, wodurch eine Vakuumhaut-Verpackung bereitgestellt wird, **dadurch gekennzeichnet, dass** das dual-ofengeeignete obere Gewebe ein biaxial orientierter Polyesterfilm ist, umfassend, bevorzugt bestehend aus:
- einer äußeren wärmeversiegelbaren Polyesterschicht a),
- einer inneren Polyester-Basisschicht b), umfassend ein Polyester mit einer intrinsischen Viskosität (I.V.), gemessen gemäß ASTM D4603-03, höher als 0,75 dl/g, und
- eine äußere Polyesterschicht c).

3. Mikrowellengeeignete, ofengeeignete oder vorzugsweise dual-ofengeeignete Vakuumhaut-Verpackung, umfassend:

- einen mikrowellengeeigneten oder ofengeeigneten oder vorzugsweise dual-ofengeeigneten Träger,
- ein Lebensmittel-Produkt, welches auf den Träger geladen ist, und
- ein oberes Gewebe, welches über das Produkt drapiert und an die Fläche des Trägers geschweißt ist, welche nicht von dem Produkt bedeckt ist,

**dadurch gekennzeichnet, dass** das obere Gewebe ein dual-ofengeeigneter, biaxial-orientierter Polyesterfilm ist, umfassend, vorzugsweise bestehend aus:

- einer äußeren wärmeversiegelbaren Polyesterschicht a),
- einer inneren Polyester-Basisschicht b), umfassend ein Polyester mit einer intrinsischen Viskosität (I.V.), gemessen gemäß ASTM D4603-03, höher als 0,75 dl/g, und
- eine äußere Polyesterschicht c).

4. Verpackung nach Anspruch 3, wobei der Träger aus demselben Polyesterfilm hergestellt ist wie das obere Gewebe.

5. Verpackung nach Anspruch 3, wobei der Träger aus einem aufgeschäumten C-PET hergestellt ist.

6. Verpackung nach einem der Ansprüche 3 bis 5, wobei das Lebensmittel-Produkt ausgewählt ist aus Fisch, Fleisch, verarbeitetem Fleisch, Geflügel, Schweinefleisch, Lamm, Backwaren, Meeresfrüchte, stabilisiertem Gemüse oder Fertiggerichten.

7. Verwendung, Prozess oder Verpackung nach einem der vorhergehenden Ansprüche, wobei der Polyesterfilm des oberen Gewebes eine Gesamtdicke aufweist, welche geringer ist als 50 Mikrometer, vorzugsweise geringer als 40 Mikrometer, noch bevorzugter geringer als 35 Mikrometer, noch weiter bevorzugt geringer als 30 Mikrometer oder 25 Mikrometer.

8. Verwendung, Prozess oder Verpackung nach einem der vorhergehenden Ansprüche, wobei der Polyesterfilm des oberen Gewebes koextrudiert ist.

9. Verwendung, Prozess oder Verpackung nach einem der vorhergehenden Ansprüche, wobei der Polyesterfilm des oberen Gewebes simultan orientiert war.

10. Verwendung, Prozess oder Verpackung nach einem der vorhergehenden Ansprüche, wobei der Polyesterfilm des oberen Gewebes einen totalen freien Schrumpfanteil von weniger als 15% aufweist, gemessen gemäß des Testverfahrens, welches in der Beschreibung geschildert ist.

11. Verwendung, Prozess oder Verpackung nach einem der vorhergehenden Ansprüche, wobei das Polyester der Basisschicht b) des Polyesterfilms des oberen Gewebes eine intrinsische Viskosität (I.V.) von wenigstens 0,8 dl/g aufweist.

12. Verwendung, Prozess oder Verpackung nach einem der vorhergehenden Ansprüche, wobei der Polyesterfilm des oberen Gewebes umfasst:

- eine wärmeversiegelbare Schicht a), umfassend

von etwa 25 bis 70 Gewichts-% von wenigstens einem ersten amorphen Polyester, welches eine Schmelztemperatur aufweist, welche nicht höher als die Schmelztemperatur des Polyesters der Basisschicht b) ist,
von 10 bis 20 Gewichts-% von wenigstens einem thermoplastischen Harz, ausgewählt aus Polyamiden, Polystyrenen, Polyethylenen, Ionomeren, Ethylen / ungesättigte Carboxylsäure-Copolymeren, Ethylen / ungesättigte Ester-Copolymeren, Ethylen / Propylen-Copolymeren, Maleinanhydrid-modifiziertem Polyethylen und Ethylen / zyklisches Olefin-Copolymeren, vorzugsweise ein Maleinanhydrid-modifziertes Polyethylen, und
von 20 bis 60 Gewichts-% von wenigstens einem weiteren Polyester, **gekennzeichnet durch** eine intrinsische Viskosität von wenigstens 0,75 dl/g oder höher und/oder durch eine Glas-Übergngstemperatur Tg nicht höher als 80°C und/oder einen Schmelzpunkt höher als 240°C, gemessen gemäß ASTM D3418; und/oder

- eine innere Polyester-Basisschicht b), umfassend eine Mischung von wenigstens 50% eines Polyester-Harzes mit einer I.V. höher als 0,75 dl/g und höchstens 50% eines amorphen Polyesters; und/oder
- eine äußere Polyesterschicht c), umfassend ein Polyester, **gekennzeichnet durch** eine intrinsische Viskosität von wenigstens 0,75 dl/g oder höher und/oder durch eine Glas-Übergangstemperatur Tg nicht höher als 80°C und/oder einen Schmelzpunkt höher als 240°C, gemessen gemäß ASTM D3418.

13. Verwendung, Prozess oder Verpackung nach einem der vorhergehenden Ansprüche, wobei der Polyesterfilm des oberen Gewebes besteht aus:

- einer wärmeversiegelbaren Schicht a), bestehend aus:

von etwa 40 bis 70 Gewichts-% von wenigstens einem ersten amorphen Polyester mit einer Schmelztemperatur nicht höher als die Schmelztemperatur des Polyesters der Basisschicht b),
von 10 bis 20 Gewichts-% von wenigstens einem thermoplastischen Harz, ausgewählt aus Ethylen / ungesättigte Carboxylsäure-Copolymeren, Ethylen / ungesättigte Ester-Copolymeren und Maleinanhydrid-modifiziertem Polyethylen, und
von 20 bis 50 Gewichts-% von wenigstens einem weiteren Polyester, **gekennzeichnet durch** eine intrinsische Viskosität von wenigstens 0,75 dl/g oder höher und/oder durch eine Glas-Übergangstemperatur Tg nicht höher als 80°C und/oder einen Schmelzpunkt höher als 240°C;

- eine innere Polyester-Basisschicht b), bestehend aus einer Mischung von wenigstens 55% eines Polyester-Harzes mit einer I.V. höher als 0,75 dl/g und höchstens 45% eines amorphen Polyesters; und
- einer äußeren Polyesterschicht c), umfassend wenigstens 95% desselben Polyesters, **gekennzeichnet durch** eine intrinsische Viskosität von wenigstens 0,75 dl/g der Basisschicht b).

14. Verwendung, Prozess oder Verpackung nach einem der vorhergehenden Ansprüche, wobei in dem Polyesterfilm des oberen Gewebes das amorphe Polyester der Basisschicht b) dasselbe amorphe Polyester ist, das in der wärmeversiegelbaren Schicht a) vorliegt, und/oder das Polyester der äußeren Polyesterschicht c) dasselbe Polyester ist, welches in der Basisschicht b) vorliegt, welches eine I.V. höher als 0,75 dl/g aufweist.

15. Verwendung, Prozess oder Verpackung nach einem der vorhergehenden Ansprüche, wobei der Polyesterfilm des oberen Gewebes ferner **gekennzeichnet ist durch**:

einen Elastizitätsmodul von wenigstens 20000 Kg/cm$^2$ in sowohl LD als auch TD und/oder
eine Zugfestigkeit von wenigstens 1500 Kg/cm$^2$ in sowohl LD als auch TD und/oder
eine Bruchdehnung von wenigstens 105% in sowohl LD als auch TD, wobei diese Parameter gemäß ASTM D882 bei 23°C gemessen werden.

## Revendications

1. Utilisation d'un film de polyester biaxialement orienté double pouvant passer au four comme voile supérieur dans un emballage par pelliculage sous vide, ledit film comprenant, préférablement constitué de,

- une couche de polyester thermoscellable externe a),
- une couche de base de polyester interne b), comprenant un polyester ayant une viscosité intrinsèque (I.V.) mesurée selon la norme ASTM D4603-03 supérieure à 0,75 dl/g, et
- une couche de polyester externe c).

2. Procédé d'emballage par pelliculage sous vide pour la fabrication d'un emballage par pelliculage sous vide pouvant passer aux micro-ondes ou pouvant passer au four ou, préférablement, double pouvant passer au four, qui comprend :

- la fourniture d'un voile supérieur double pouvant passer au four,
- la fourniture d'un support pouvant passer aux micro-ondes, pouvant passer au four ou, préférablement, double pouvant passer au four,
- la mise en place du voile supérieur sur le support,
- la mise en place d'un produit alimentaire sur le support,
- le chauffage du voile supérieur et son moulage vers le bas, par-dessus et autour du produit et contre le support, l'espace entre le voile supérieur chauffé et le support ayant été évacué, pour former une pellicule serrée autour du produit, et
- le scellement étanche dudit voile supérieur sur la surface entière du support non recouverte par le produit par pression d'air différentielle, fournissant ainsi un emballage par pelliculage sous vide,

**caractérisé en ce que** ledit voile supérieur double pouvant passer au four est un film de polyester biaxialement orienté comprenant, préférablement constitué de,

- une couche de polyester thermoscellable externe a),
- une couche de base de polyester interne b), comprenant un polyester ayant une viscosité intrinsèque (I.V.) mesurée selon la norme ASTM D4603-03 supérieure à 0,75 dl/g, et
- une couche de polyester externe c).

3. Emballage par pelliculage sous vide pouvant passer aux micro-ondes, pouvant passer au four ou, préférablement, double pouvant passer au four, comprenant :

- un support pouvant passer aux micro-ondes, pouvant passer au four ou, préférablement, double pouvant passer au four,
- un produit alimentaire chargé sur ledit support et
- un voile supérieur enveloppé sur le produit et soudé à la surface du support non recouverte par le produit,

**caractérisé en ce que** le voile supérieur est un film de polyester biaxialement orienté double pouvant passer au four comprenant, préférablement constitué de

- une couche de polyester thermoscellable externe a),
- une couche de base de polyester interne b), comprenant un polyester ayant une viscosité intrinsèque (I.V.) mesurée selon la norme ASTM D4603-03 supérieure à 0,75 dl/g, et
- une couche de polyester externe c).

4. Emballage selon la revendication 3, le support étant constitué du même film de polyester du voile supérieur.

5. Emballage selon la revendication 3, le support étant constitué d'un C-PET expansé.

6. Emballage selon l'une quelconque des revendications 3 à 5, ledit produit alimentaire étant sélectionné parmi le poisson, la viande, la viande transformée, la volaille, le porc, l'agneau, un produit de boulangerie, des fruits de mer, des légumes stabilisés ou des plats prêts à manger.

7. Utilisation, procédé ou emballage selon l'une quelconque des revendications précédentes, le film de polyester du voile supérieur ayant une épaisseur totale inférieure à 50 microns, préférablement inférieure à 40 microns, plus préférablement inférieure à 35 microns, même plus préférablement inférieure à 30 microns ou à 25 microns.

8. Utilisation, procédé ou emballage selon l'une quelconque des revendications précédentes, le film de polyester du voile supérieur étant coextrudé.

9. Utilisation, procédé ou emballage selon l'une quelconque des revendications précédentes, le film de polyester du voile supérieur étant simultanément orienté.

10. Utilisation, procédé ou emballage selon l'une quelconque des revendications précédentes, le film de polyester du voile supérieur ayant un % total de rétrécissement libre inférieur à 15 %, mesuré selon le procédé de test reporté dans la description.

11. Utilisation, procédé ou emballage selon l'une quelconque des revendications précédentes, le polyester de la couche de base b) du film de polyester du voile supérieur ayant une viscosité intrinsèque (I.V.) d'au moins 0,8 dl/g.

12. Utilisation, procédé ou emballage selon l'une quelconque des revendications précédentes, le film de polyester du voile supérieur comprenant

- une couche thermoscellable a) comprenant d'environ 25 % à 70 % en poids d'au moins un premier polyester amorphe ayant une température de fusion non supérieure à la température de fusion du polyester de la couche de base b),
de 10% à 20 % en poids d'au moins une résine thermoplastique sélectionnée parmi les polyamides, les polystyrènes, les polyéthylènes, les ionomères, les copolymères d'éthylène/acide carboxylique insaturés, les copolymères d'éthylène/esters insaturés, les copolymères d'éthylène/propylène, les copolymères de polyéthylène et d'éthylène modifiés à l'anhydride maléique/oléfine cyclique, préférablement un polyéthylène modifié à l'anhydride maléique et
de 20 % à 60 % en poids d'au moins un polyester supplémentaire **caractérisé par** une viscosité intrinsèque d'au moins 0,75 dl/g ou plus et/ou par une température de transition vitreuse Tg non supérieure à 80°C et/ou un point de fusion supérieur à 240°C mesuré selon la norme ASTM D3418 ; et/ou
- une couche de base de polyester interne b) comprenant un mélange par admixtion d'au moins 50 % d'une résine de polyester ayant une I.V. supérieure à 0,75 dl/g, et d'au plus 50 % d'un polyester amorphe ; et/ou
- une couche de polyester externe c) comprenant un polyester **caractérisé par** une viscosité intrinsèque d'au moins 0,75 dl/g ou plus et/ou par une température de transition vitreuse Tg non supérieure à 80°C et/ou un point de fusion supérieur à 240°C mesuré selon la norme ASTM D3418.

13. Utilisation, procédé ou emballage selon l'une quelconque des revendications précédentes, le film de polyester du voile supérieur étant constitué

- d'une couche thermoscellable a) constituée d'environ 40 % à 70 % en poids d'au moins un premier polyester amorphe ayant une température de fusion non supérieure à la température de fusion du polyester de la couche de base b),
de 10% à 20 % en poids d'au moins une résine thermoplastique sélectionnée parmi les copolymères d'éthylène/acide carboxylique insaturés, les copolymères d'éthylène/esters insaturés et le polyéthylène modifié à l'anhydride maléique, et
de 20 % à 50 % en poids d'au moins un polyester supplémentaire **caractérisé par** une viscosité intrinsèque d'au moins 0,75 dl/g ou plus et/ou par une température de transition vitreuse Tg non supérieure à 80°C et/ou un point de fusion supérieur à 240°C ;
- une couche de base de polyester interne b) constituée d'un mélange par admixtion d'au moins 55 % d'une résine de polyester ayant une I.V. supérieure à 0,75 dl/g et d'au plus 45 % d'un polyester amorphe ; et
- une couche de polyester externe c) comprenant au moins 95 % du même polyester **caractérisé par** une viscosité intrinsèque d'au moins 0,75 dl/g de la couche de base b).

14. Utilisation, procédé ou emballage selon l'une quelconque des revendications précédentes, dans le film de polyester du voile supérieur le polyester amorphe de la couche de base b) étant le même polyester amorphe présent dans la couche thermoscellable a) et/ou
le polyester de la couche de polyester externe c) étant le même polyester présent dans la couche de base b) ayant une I.V. supérieure à 0,75 dl/g.

15. Utilisation, procédé ou emballage selon l'une quelconque des revendications précédentes, le film de polyester du voile supérieur étant en outre **caractérisé par** :

- un module d'élasticité d'au moins 20 000 Kg/cm$^2$ dans à la fois les sens LD et TD et/ou
- une résistance à la traction d'au moins 1 500 Kg/cm$^2$ dans à la fois les sens LD et TD et/ou
- un allongement à la rupture d'au moins 105 % dans à la fois les sens LD et TD, ces paramètres étant mesurés selon la norme ASTM D882 à 23°C.

FIG.1

FIG.2A

FIG.2B

FIG.2C

BRIDGING

FIG.3A

AIR POCKET

FIG.3B

FIG.4

FIG.5

FIG.6

FIG.7

## REFERENCES CITED IN THE DESCRIPTION

**Patent documents cited in the description**

- WO 2007093495 A
- WO 2009013284 A
- WO 2012160142 A
- WO 2007054698 A, DuPont
- FR 1258357
- FR 1286018
- AU 3491504
- US RE30009 E
- US 3574642 A
- US 3681092 A
- US 3713849 A
- US 4055672 A
- US 5346735 A
- WO 2009141214 A
- EP 2722279 A
- EP 2459448 A
- WO 2009032627 A2
- WO 2015189351 A
- US 4302565 A, Goeke
- US 4302566 A, Karol
- US 5026798 A, Canich
- EP 372846 A
- WO 2013080143 A
- US 4841605 A

**Non-patent literature cited in the description**

- **DUPONT.** *Cooking with Mylar®,* 17 March 2016, http://europe.dupontteijinfilms.com/media/2426/dtf-cooking-with-mylar-the-flexible-cookware-brochure.pdf
- **DUPONT.** *Cooking with Mylar®,* 17 March 2016, 2